# EUROPEAN PATENT SPECIFICATION

(11) **EP 4 608 641 B1**
(45) Date of publication and mention of the grant of the patent: **02.12.2026**
(21) Application number: 23801870.9
(22) Date of filing: 09.10.2023
(51) Int. Cl.: B31F 1/28

(54) **SINGLE FACER FOR PRODUCING CORRUGATED BOARD WITH A SYSTEM FOR CONTROLLING THE PRESSING BELT, AND RELATED METHOD**
EINSEITIGE WELLPAPPENMASCHINE MIT EINEM SYSTEM ZUR STEUERUNG DES PRESSBANDES UND ZUGEHÖRIGES VERFAHREN
MACHINE POUR CARTON SIMPLE FACE POUR LA PRODUCTION DE CARTON ONDULÉ AVEC UN SYSTÈME DE COMMANDE DE LA COURROIE DE PRESSAGE ET PROCÉDÉ ASSOCIÉ

(30) Priority: 25.10.2022 IT 202200022020
(43) Date of publication of application: 03.09.2025
(73) Proprietor: FOSBER S.p.A., 55060 Pescaglia (LU) (IT)
(72) Inventor: VANNUCCHI, Lorenzo, 55064 Pescaglia (LU) (IT); ADAMI, Mauro, 55049 Viareggio (LU) (IT)
(74) Representative: Mannucci, Michele
(86) International application number: PCT/IB2023/060098
(87) International publication number: WO 2024/089505

(56) References cited:
- EP-A1- 0 387 242
- EP-A1- 2 805 810
- EP-A1- 2 868 467
- WO-A1-2021/224143
- US-A- 5 394 222

## Description

### TECHNICAL FIELD

The present invention relates to machines for producing corrugated board. Particularly, the invention relates to improvements to corrugators or so-called single facers.

### BACKGROUND ART

The corrugated board is manufactured starting from smooth paper webs unwound from master rolls. In its simplest form, the corrugated board consists of a smooth paper web and a corrugated paper web, glued together at the crests of the flutes of the corrugated paper web. Usually, a second smooth paper web is attached to this base structure, i.e. is glued to the corrugated paper web so that this latter is interposed between the two smooth paper webs that are called liners. In some cases, other webs are added to this structure consisting of three paper webs, resulting in a sequence of corrugated paper webs interposed between smooth paper webs.

The single-face corrugated board is produced by a single facer that comprises a pair of mutually meshing corrugating rollers, between which a first smooth paper web is supplied. The first smooth paper web is hot-deformed in the nip between the two corrugating rollers and becomes a corrugated, so-called fluted, paper web. An adhesive is applied to the crests of the flutes of the fluted paper web adhering to one of the corrugating rollers, and a smooth paper web is pressure- and hot-applied to the fluted paper web provided with an adhesive.

A pressing unit is provided for gluing the fluted paper web and the smooth paper web together, the pressing unit comprising at least one pressing member that is pressed against one of the corrugating rollers. The smooth paper web and the fluted paper web are fed between the corrugating roller and the pressing member.

In some single facers, the pressing unit comprises a continuous flexible member in the form of a belt, driven around guide rollers. Examples of such single facers are disclosed in US9,545,769, EP0698752, US10,293,588, US2015/0122423, US5,512,020, EP2805810, US5,951,817, US2014/0345804, EP0850753, JP10-710, JP2001-38830, JP10-709. EP3556548 discloses a single facer provided with a mechanism for replacing the corrugating rollers. The single facer also includes a pair of fixed-axis guide rollers, around which a pressing belt is driven. The pressing belt is raised when the corrugating rollers are removed from the single facer.

The use of continuous flexible members in the form of belts requires carefully controlling the traction and position thereof during operation. This requires the use of complex control and guide systems.

Various innovative solutions for making belt single facers are disclosed in WO2021224143, WO2021224141, and WO2021224142. These publications disclose, among other things, devices for controlling the tension of the continuous flexible member and for checking the correct position thereof during operation. The single facers disclosed in these publications have significant advantages and improvements over the prior art single facers. However, there is still a need to make the devices for controlling the tension and position of the continuous flexible member more effective and reliable during operation.

### SUMMARY

According to one aspect, a single facer is provided that includes a first corrugating roller and a second corrugating roller, meshing with each other, supported by a support structure. The support structure comprises a first arm on a first side of the single facer and a second arm on a second side of the single facer. The single facer further comprises a first guide roller with a first rotation axis, supported through a respective first support to the first arm and through a respective second support to the second arm. A second guide roller with a second rotation axis is supported through a respective first support to the first arm and through a respective second support to the second arm.

In addition, the single facer includes a continuous flexible member, driven around the first guide roller and the second guide roller and having a first longitudinal edge and a second longitudinal edge.

During the operation of the single facer, the position of the continuous flexible member is controlled and adjusted through an adjusting and guiding arrangement.

The adjusting and guiding arrangement includes sensors adapted to detect a lateral shifting and a twisting of the continuous flexible member. Moreover, actuators are provided, adapted to modify the mutual position of the first guide roller and of the second guide roller, as well as a control unit.

The control unit is configured for activating the actuators based on signals received from the sensors and performing a correction cycle by modifying the mutual position of the first guide roller and of the second guide roller from an initial position to a correction position causing a correction of the lateral shifting and/or the twisting. The control unit is configured for bringing the first guide roller and the second guide roller in an intermediate position between the initial position and the correction position, once the lateral shifting and/or the twisting has been removed or corrected.

In this description and the attached claims, the term "twisting of the continuous flexible member" indicates a condition where one of the two longitudinal edges of the flexible member advances at a greater speed than the other. The term "lateral shifting of the continuous flexible member" indicates a transverse displacement of the continuous flexible member in a direction orthogonal to the forward direction, i.e., in a direction parallel to the rotation axes of the guide rollers.

The correction cycle includes a shifting correction cycle and a twisting correction cycle.

In practice, the fact that the control unit is configured for bringing the first guide roller and the second guide roller to a position intermediate between the initial position and the correction position, once the lateral shifting and/or twisting has been removed or corrected, means that the guide rollers are not returned to the original position, but rather to an offset position, which tends to counterbalance the factors that caused the lateral shifting and/or twisting.

In practice, a relative movement of the guide rollers imposed by the control unit to correct the lateral shifting is not completely canceled after the lateral shifting correction. On the contrary, the guide rollers are brought to a position where they counteract the onset of a new lateral shifting.

If the correction cycle involves, for example, bringing the rotation axes of the guide rollers from a parallel position to a skewed position to correct the lateral shifting, or to a coplanar but not parallel position to correct a twisting, once the lateral shifting and/or the twisting have been corrected, the guide rollers are not brought back with the rotation axes parallel to one another, but rather they are brought to a position where the rotation axes remain slightly skewed or coplanar but slightly not parallel. The offset from the position of parallelism is such as to counteract, to slow down or to limit the onset of new twisting and/or lateral shifting.

In the case of lateral shifting correction, when the lateral shifting has been corrected, the two rollers are not brought back with their rotation axes parallel, but rather are kept with their rotation axes slightly skewed, with such a tilt that they oppose the tendency of the continuous flexible member to shift laterally.

Similarly, a relative displacement of the guide rollers imposed by the control unit to correct the twisting is not completely canceled after the twisting correction. On the contrary, the guide rollers are brought to a position where they counteract the onset of a new twisting. For example, in this case the correction cycle may involve changing the length of the path traveled by one of the two side edges of the flexible member with respect to the other. This can be achieved by moving the respective side supports of the guide rollers away from each other. Once the twisting has been corrected, the two guide rollers can be brought back toward the initial position, but not with their axes parallel, rather in an offset position, with the path that has been lengthened kept longer than the other, so as to counteract, to prevent, or to slow the onset of a new twisting.

According to another aspect, a method is provided for controlling a single facer of the type defined above. The method comprises the following steps:
monitoring the position of the continuous flexible member relative to the first guide roller and the second guide roller during the rotation of the first guide roller and of the second guide roller;
if a lateral shifting and/or a twisting of the continuous flexible member is detected, performing a correction cycle by modifying the mutual position of the first guide roller and of the second guide roller from an initial position to a correction position, causing a correction of the lateral shifting and/or the twisting; and
once the lateral shifting and/or the twisting has been corrected, bringing the first guide roller and the second guide roller to an intermediate position between the initial position and the correction position, keeping an offset which prevents, limits or slows the onset of a new twisting and/or a new lateral shifting.

Further advantageous features and embodiments of the single facer and the method of the invention are described below and defined in the attached claims.

Keeping an offset condition once the correction cycle has been performed, instead of returning the guide rollers to an initial position where the rotation axes are parallel, allows to reduce substantially the number of interventions for correcting the position of the flexible member. This latter is held more stably in the correct position, eliminating its tendency to lateral shifting and/or twisting. For example, if external factors tend to cause a lateral shifting of the continuous flexible member, keeping an offset in the position of the rotation axes of the rollers, relative to the condition of parallelism, so as to counteract the shifting, stabilizes the transverse position of the continuous flexible member. The tendency of the continuous flexible member to shift laterally is eliminated or slowed, this resulting in better and smoother operation.

Analogously, if external factors tend to cause a twisting of the continuous flexible member, keeping an offset in the position of the rotation axes of the rollers, with respect to the condition of parallelism, so as to counteract the shifting, stabilizes the position of the continuous flexible member, preventing or reducing the tendency of one of its side edges to overrun the other.

The advantage of keeping a correction offset instead of returning the guide rollers to the position of parallelism at the end of each correction cycle, is twofold: the continuous flexible member is less stressed and the wear thereof is reduced. Secondly, a more stable quality of the product (single-face corrugated board) obtained at the output of the single facer is achieved.

### BRIEF DESCRIPTION OF THE DRAWING

The invention shall be better understood by following the description and the accompanying drawing, which show non-limiting examples of embodiment of the invention. More specifically, in the drawing:
Fig.1 shows a side view of the single facer in working position;
Fig. 2 shows a side view of the single facer of Fig. 1 from the opposite side with respect to Fig. 1;
Fig.2A shows a very simplified section of the single facer according to a vertical plane intermediate between the two flanks;
Fig.2B shows a section of the single facer in the position of Figs. 1 and 2, according to a vertical plane intermediate between the two flanks;
Fig.3 shows a side view similar to Fig.1, with the pressing unit raised;
Fig.4 shows a side view similar to Fig.2, with the pressing unit raised;
Fig.5 shows a section of the single facer in the position of Figs. 3 and 4, according to a vertical plane intermediate between the two sides of the single facer;
Fig.6 shows a plan view of the pressing unit;
Fig.6A shows a view similar to Fig.6, with the magnetic sensors and the control unit schematically indicated;
Fig.7 shows a view according to VII-VII of Fig.6;
Fig. 8 shows a view according to VIII-VIII of Fig. 6;
Fig. 9 shows a view according to IX-IX of Fig. 6;
Fig. 10 shows a section according to X-X of Fig.8;
Fig. 11 shows a section according to XI-XI of Fig. 8;
Fig.12 shows a partial axonometric view of the pressing unit, on the side where the motor for actuating the continuous flexible member is mounted;
Figs.13A and 13B show partial axonometric views of the pressing unit illustrating the sensors for detecting the position of the continuous flexible member;
Figs. 14A, 14B show two schematic side views of the pressing unit illustrating the movement of one of the two guide rollers of the continuous flexible member to adjust the tension thereof;
Figs. 15 and 16 show two schematic views of the pressing unit, according to the line XV-XV of Fig.16 and to the line XVI-XVI of Fig.15 respectively, illustrating the movement of one of the guide rollers of the continuous flexible member to correct the twisting thereof;
Figs. 17A, 17B show two schematic views of the pressing unit illustrating the movement of one of the two guide rollers of the continuous flexible member to correct the twisting thereof; and
Figs. 18 and 19 show two flow diagrams summarizing the logics for controlling and correcting the twisting and the lateral shifting of the continuous flexible member.

### DETAILED DESCRIPTION

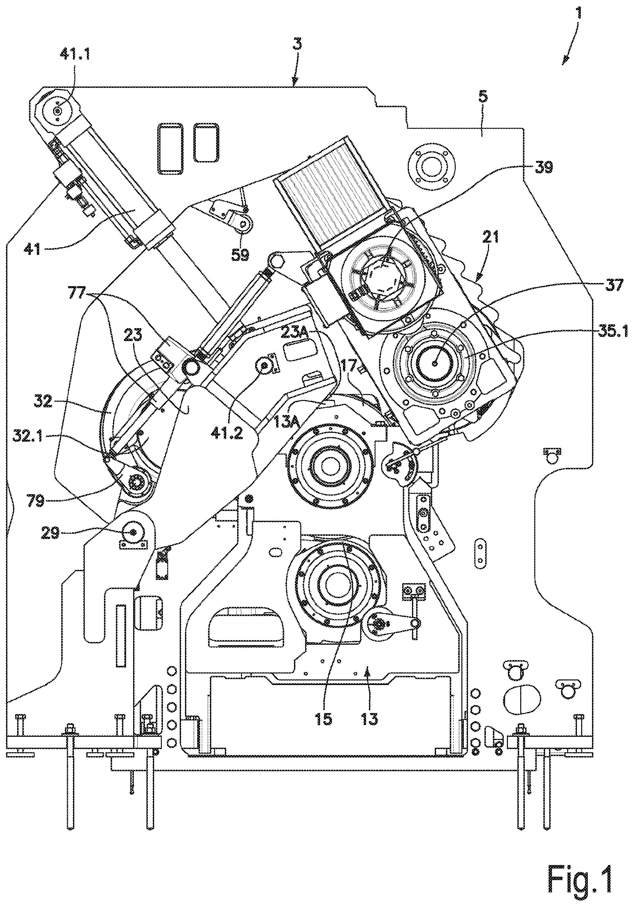

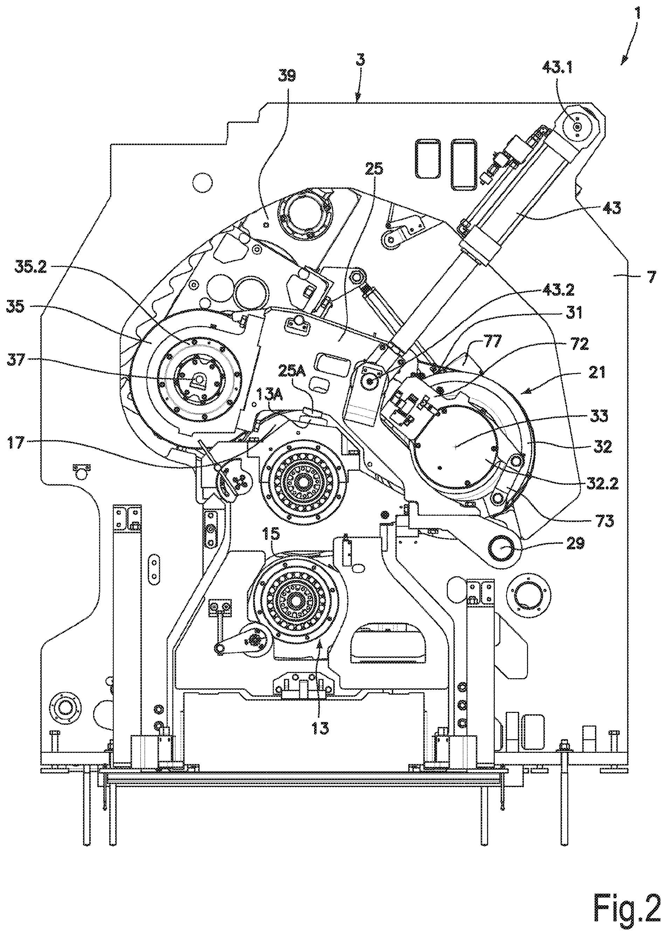

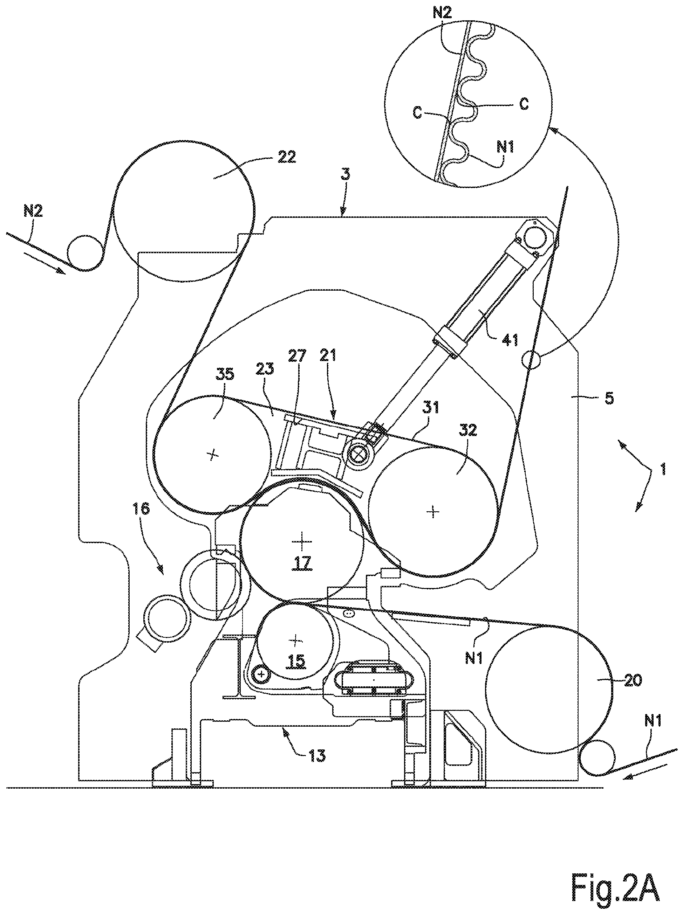

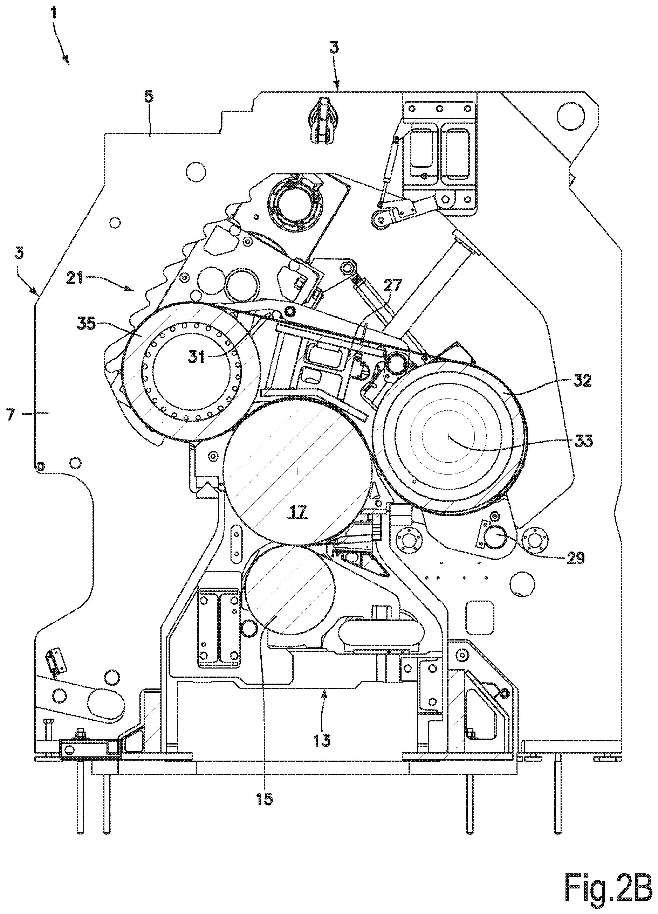

The general structure of the single facer 1 can be understood from Figs. 1, 2 and 2A, the first two of which show side views of the single facer from two opposite sides, and Fig.2A shows a very simplified section, according to a vertical plane, intermediate between the two sides, where only the main components of the single facer 1 are shown. Fig. 2B shows a cross-section according to a vertical plane intermediate between the two sides of the single facer.

The single facer 1 includes a load-bearing frame 3, on which there are supported the corrugating rollers and a pressing unit, which is used to press the two paper webs forming a sheet of single-face corrugated board against each other, not shown in the drawings. The frame comprises a first flank 5 on a first side of the single facer 1 and a second flank 7 on a second side of the single facer 1. The two flanks 5 and 7 are joined together by means of appropriate horizontal crossbars. In general, the first side is the side on which the motorizations are provided, and the second side is the operator side, i.e. the side from which the operator usually accesses the single facer 1.

A cassette or cartridge 13, comprising a first corrugating roller 15 and a second corrugating roller 17 put over the first corrugating roller, is inserted into the load-bearing frame 3. The cartridge 13 is replaceable, i.e. interchangeable, to change the characteristics of the fluted paper web manufactured by the single facer 1, using different corrugating rollers 15, 17. The structure of the cartridge and the systems for the replacement thereof are known and will not be described in detail.

Each corrugating roller has a corrugated cylindrical surface, and the two corrugated cylindrical surfaces mesh with each other at a corrugation nip defined between the two corrugating rollers 15, 17, where a first smooth paper web passes, which is corrugated due to the pressure applied by the two corrugating rollers.

The first corrugating roller 15 co-acts with an adhesive applicator 16, shown only in the simplified section of Fig.2A, which applies an adhesive to the crests of the flutes formed on the first paper web before a smooth second paper web is applied thereto (while it still contacts the second corrugating roller 17). In order to make the two paper webs, respectively the fluted paper web and the smooth paper web, adhere, the single facer 1 comprises a pressing unit or assembly 21, so arranged as to act from the top downwards on the upper part of the second corrugating roller 17, around which the two paper webs are guided.

In the illustrated embodiment, the pressing unit or assembly 21 comprises a pivoting structure, that in turn comprises a first pivoting arm 23 on the first side of the load-bearing frame 3, and a second pivoting arm 25 on the second side of the load-bearing frame 3. The two pivoting arms 23, 25 can be rigidly connected to each other, for example by means of a beam 27. In the illustrated embodiment, both the pivoting arms 23, 25 are hinged to the load-bearing frame 3 about a pivot axis 29, which is parallel to the axes of the corrugating rollers 15, 17 when these latter are mounted in the single facer 1.

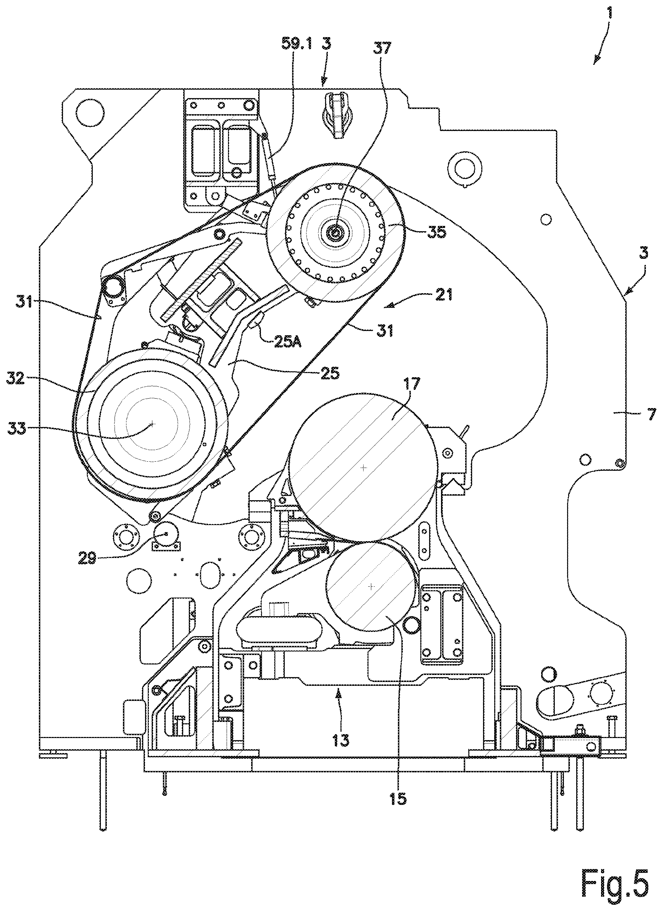

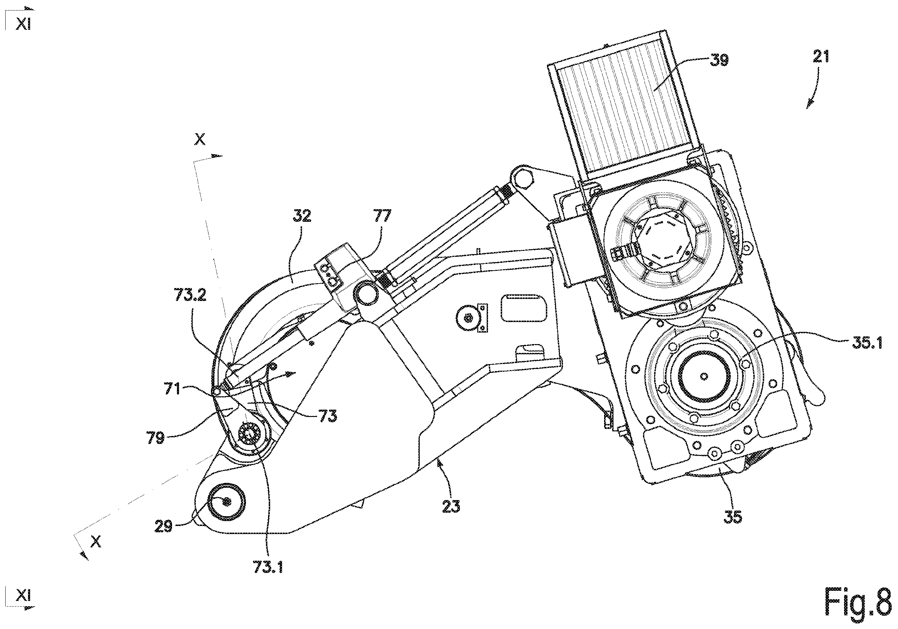

The pressing unit or assembly 21 further includes a continuous flexible member 31, for example a continuous belt. The continuous flexible member 31 is guided around a first guide roller 32, rotating about a first rotation axis 33, and around a second guide roller 35, rotating about a second rotation axis 37. The guide rollers 32, 35 and the respective rotation axes 33, 37, as well as the continuous flexible member 21, are shown in particular in the section of Fig. 5 and Fig. 8.

The general operation of the single facer is easily understood from the simplified section of Fig.2A. A first smooth paper web N1 is guided about a heated roller 20 and fed into the corrugation nip between the first corrugating roller 15 and the second corrugating roller 17, where it is permanently deformed with the formation of flutes parallel to the rotation axes of the corrugating rollers 15, 17. The first paper web N1 remains adhering to the second corrugating roller 17 and receives, on the flutes thus formed, an adhesive applied by the adhesive applicator 16. Downstream of the adhesive applicator 16, the first corrugated web N1 is guided, by the second corrugating roller 17, under the pressing unit 21 and more precisely between the corrugated surface of the second corrugating roller 17 and the continuous flexible member 31, which acts on the second corrugating roller 17. A second smooth paper web N2 is guided around a heated roller 22 and fed between the first fluted web N1, which is adhering to the second corrugating roller 17, and the pressing unit 21, and more precisely under the continuous flexible member 31 of the pressing unit 21. The pressure exerted on the two webs N1, N2 in the nip between the pressing unit 21 and the second corrugating roller 17 causes the mutual adhesion of the webs N1, N2. At the outlet of the single facer 1 a single-face corrugated board web SF is obtained, whose structure is visible in the enlargement shown in Fig. 2A. The adhesive that joins the fluted web N1 to the smooth web N2 is indicated with C.

The first guide roller 32 and the second guide roller 35 define a first branch of the continuous flexible member 31, which consists of the portion of continuous flexible member 31 between the two guide rollers 32, 35 facing the second corrugating roller 17. The first branch of the continuous flexible member 31 constitutes the active branch, i.e. the one that is pressed against the second corrugating roller 17. A second branch, or return branch, of the continuous flexible member 31 is also defined between the guide rollers 32, 35 on the opposite side, i.e. facing the opposite side with respect to the second corrugating roller 17.

A gear motor 39, which provides the rotary motion to the second guide roller 35 and therefore to the continuous flexible member 31, is mounted on the first pivoting arm 23, while the first guide roller 32 is mounted idle on the pivoting arms 23, 25.

In further embodiments, not shown, the gear motor 39 is not provided and both the guide rollers 32 and 35 are mounted idle on the pivoting structure. In this case, the movement of the continuous flexible member can be provided through friction by the second corrugating roller 17.

The first pivoting arm 23 is constrained to a first linear actuator 41, for example a cylinder-piston actuator, preferably of the hydraulic type. One end 41.1 of the linear actuator 41 is pivoted to the load-bearing frame 3, and a second end 41.2 of the linear actuator 41 is pivoted to the first pivoting arm 23. A second linear actuator 43 is provided on the opposite side of the single facer 1 (see Fig.2), this second actuator constraining the second pivoting arm 25 to the load-bearing frame 3. One end 43.1 of the linear actuator 43 is pivoted to the load-bearing frame 3, and a second end 43.2 of the linear actuator 43 is pivoted to the second pivoting arm 25. The two linear actuators 41, 43 control the pivoting movement of the pivoting structure, comprising the pivoting arms 23, 25 and the beam 27, around the pivot axis 29 to carry out the operations that will be described below.

Further details of thee pressing unit 21 will be described hereinafter.

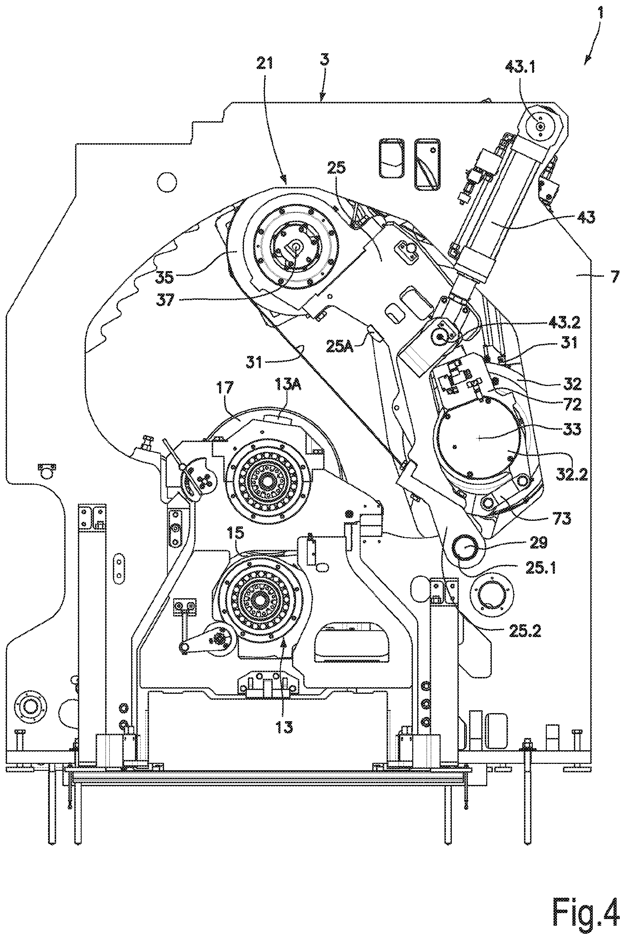

With reference to Figs. 1 to 7, the movements will be described that are carried out by the single facer 1, and more precisely by the pressing unit or assembly 21, for removing a cartridge 13 of corrugating rollers 15, 17. Figs. 1 and 2 show side views of the first side and the second side of the single facer 1 with a cartridge or cassette 13 and the respective corrugating rollers 15, 17. The pressing unit 21 is in the working position, i.e. in a lower position. In this position, the continuous flexible member 31 is pressed against the upper part of the second corrugating roller 17, i.e. the corrugating roller arranged at a higher level in the cartridge 13 resting on the load-bearing frame 3. In the working position, the actuators 41, 43 push pressing unit 21 downwards. In the illustrated embodiment, each of the pivoting arms 23, 25 has an abutment, 23A, and 25A, respectively The two abutments 23A, 25A are so arranged as to co-act with abutments 13A carried by the cartridge 13. The abutments 23A, 25A are visible in particular in Figs. 2, 4, 5, 7. One of the abutments 13A is visible in particular in Fig.2.

When the single facer 1 is in working position, the pivoting arms 23, 25 take an angular position defined by the resting of the abutments 23A, 25A on the abutments 13A of the cartridge 13, which in turn rests on support profiles 3.1, 3.2. The pressure exerted by actuators 41, 43 keeps the pivoting arms 23, 25 in position and contributes to keeping the cartridge 13 of the corrugating rollers 15, 17 in the correct position.

Tensioning actuators, that will be described hereinafter, apply traction to the continuous flexible member 31 when the pressing unit 21 is in the working position, so as to keep the continuous flexible member 31 adhering to the paper webs (not shown) interposed between the continuous flexible member 31 and the second corrugating roller 17. The traction of the continuous flexible member 31 reduces the thrust exerted by actuators 41, 43 on the abutments 13A.

In order to replace the cartridge 13, the pressing unit 21 is firstly rotated upwards with a rotary movement around the pivot axis 29. With this movement, the pressing unit 21 is brought to a raised position, spaced from the cartridge 13. The lower branch of the continuous flexible member 31, i.e. the branch facing the second corrugating roller 17, is kept in traction between the first guide roller 32 and the second guide roller 35 by means of a mechanism that will be described below.

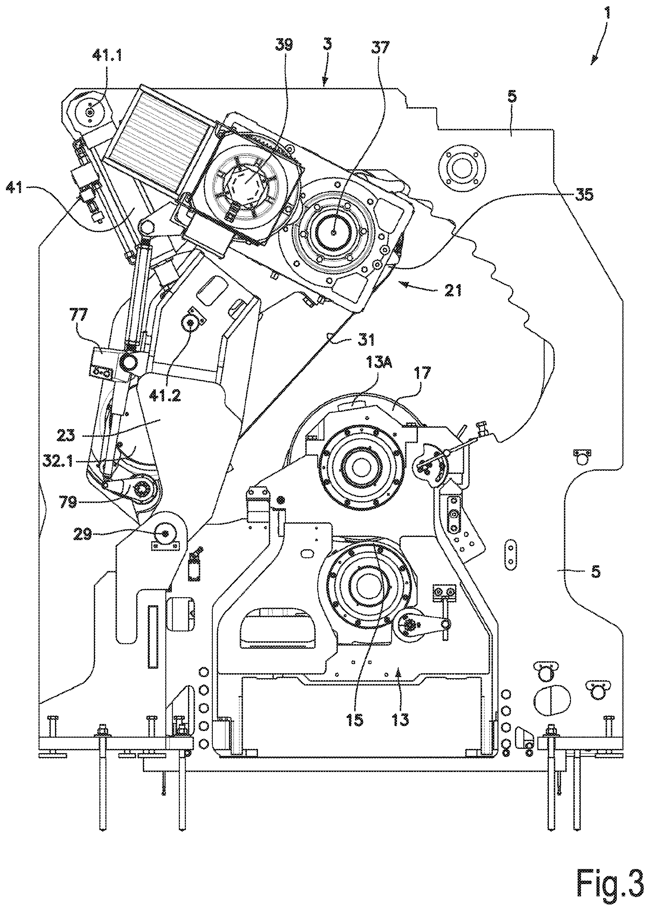

The raised position of the pressing unit 21, and thus of the pivoting structure and of the guide rollers 32, 35 carried thereon, is shown in the two side views of Figs. 3 (first side of the single facer 1) and 4 (second side of the single facer 1), and in the section of Fig.5.

Arranging the pivot axis 29 of the pivoting structure spaced from both the rotation axes 33, 37 of the first guide roller 32 and of the second guide roller 35 allows to obtain a greater spacing between the guide rollers and the second corrugating roller 17, thus facilitating the removal of the cartridge 13.

Providing the pressing unit 21 with a raising and lowering movement around the pivot axis 29 allows to obtain an extremely simple and reliable system for carrying out the various operations required by the single facer, and in particular: keeping the continuous flexible member 31 under pressure against the second corrugating roller 17 during the production of corrugated board; replacing the cartridge 13; replacing the continuous flexible member 31.

When the pivoting frame is in the raised position, the cartridge 13 can be raised and can be removed from the single facer 1. Once the cartridge 13 has been removed, it can be replaced by another cartridge 13 having different corrugating rollers 15, 17, so as to manufacture a different type of corrugated board.

When the single facer 1 is in the working position, the continuous flexible member 31 must be kept properly tensioned and guided around the guide rollers 23, 25. The width of the continuous flexible member 31 and the axial length of the guide rollers 23, 25 are very large compared with the length of the continuous flexible member 31. This makes guiding the continuous flexible member 31 particularly critical.

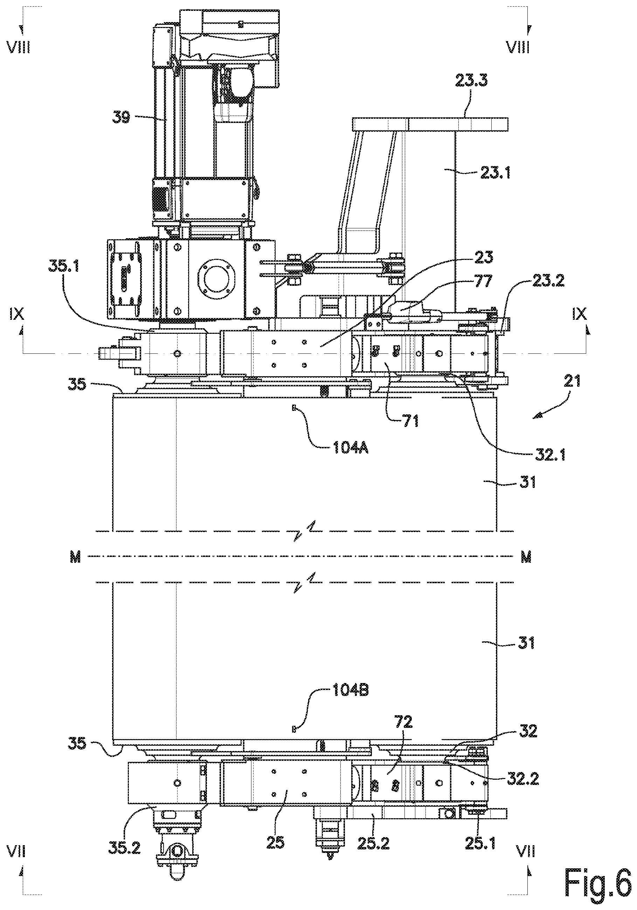

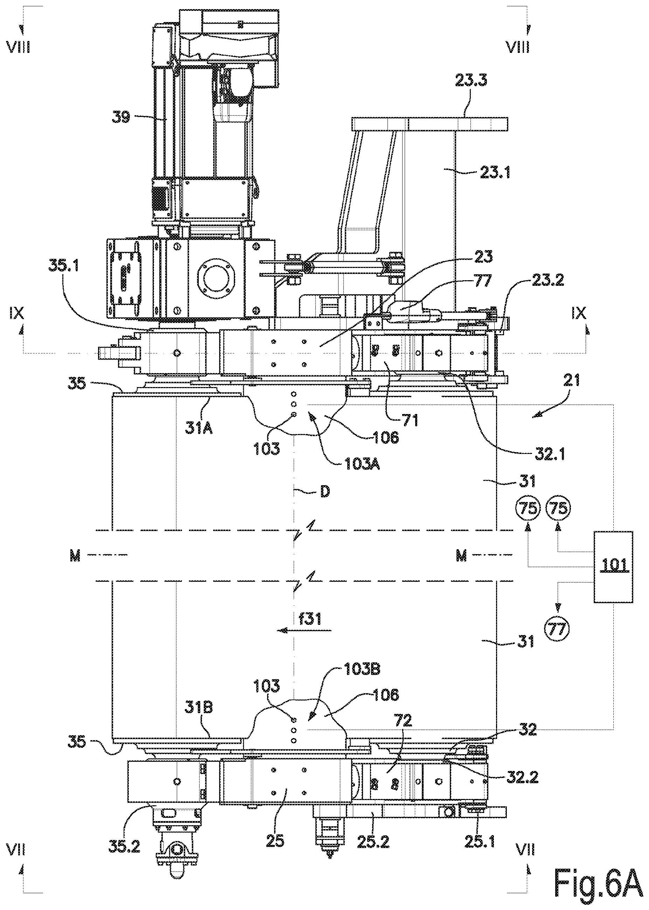

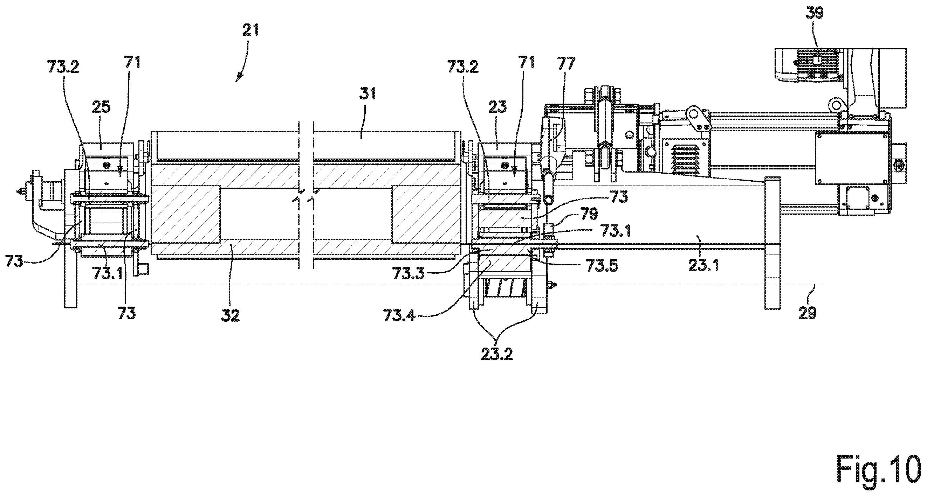

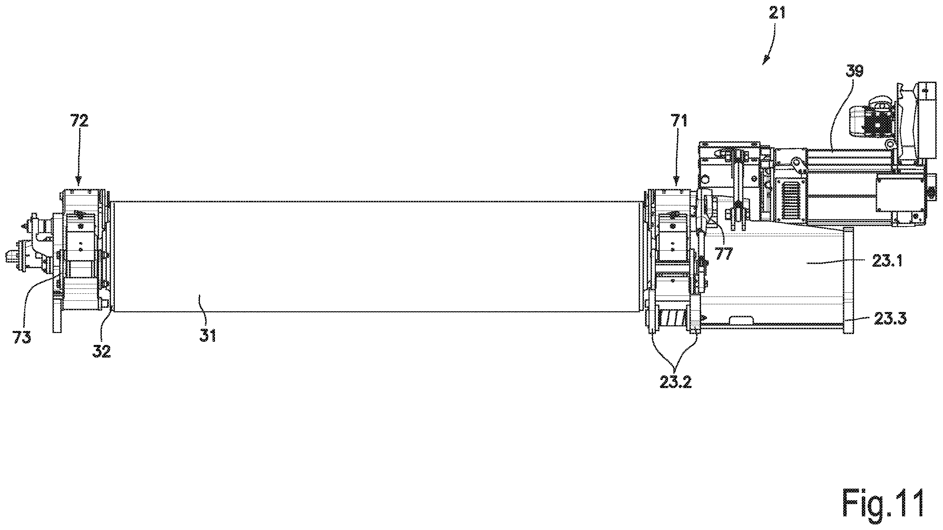

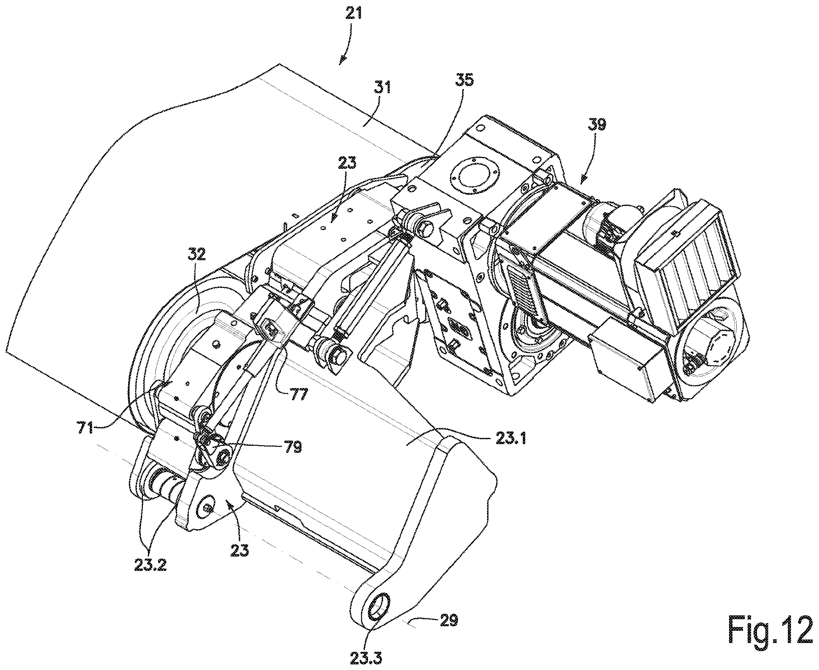

In order to keep the continuous flexible member 31 properly tensioned and guided, an arrangement is provided for adjusting and guiding the continuous flexible member 31, that will be described below with specific reference to Figs. 6 to 17B. This system is used to maintain the correct tension of the continuous flexible member 31, to prevent or to correct any shifting in the transverse direction, i.e. displacement along the axis of the guide rollers 32, 35, and to avoid or to correct any twisting of the continuous flexible member 31. Twisting occurs when the two edges of the continuous flexible member 31 advance unevenly, i.e. one at a greater speed than the other, such that a line of the continuous flexible member 31, originally parallel to the rotation axis of the guide rollers 32, 35, is displaced, taking a position no longer parallel to these rotation axes.

In the illustrated embodiment, respective actuators are associated with the pivoting arms 23, 25 for adjusting the distance between the rotation axes of the two guide rollers 32, 35, independently for the two sides of the single facer 1. Furthermore, an additional actuator, associated with one end of one of the two guide rollers 32, 35, is provided on either side of the single facer 1, the additional actuator adjusting the inclination of the axis of that guide roller in a direction transverse, and preferably approximately orthogonal, to the direction of adjustment of the center-to-center distance of the guide rollers.

More specifically, the first guide roller 32 is supported on the first pivoting arm 23 by means of a first support 32.1, and on the second pivoting arm 25 by means of a second support 32.2. Analogously, the second guide roller 35 is supported by means of a respective first support 35.1 to the first pivoting arm 23 and by means of a respective second support 35.2 to the second pivoting arm 25.

In the illustrated embodiment, the supports 35.1 and 35.2 of the second guide roller 35 are mounted in a fixed position with respect to the first pivoting arm 23 and with respect to the second pivoting arm 25, while the supports 32.1 and 32.2 of the first guide roller 32 are mounted so that they can move in a controlled manner with respect to the first pivoting arm 23 and the second pivoting arm 25, as described in detail below.

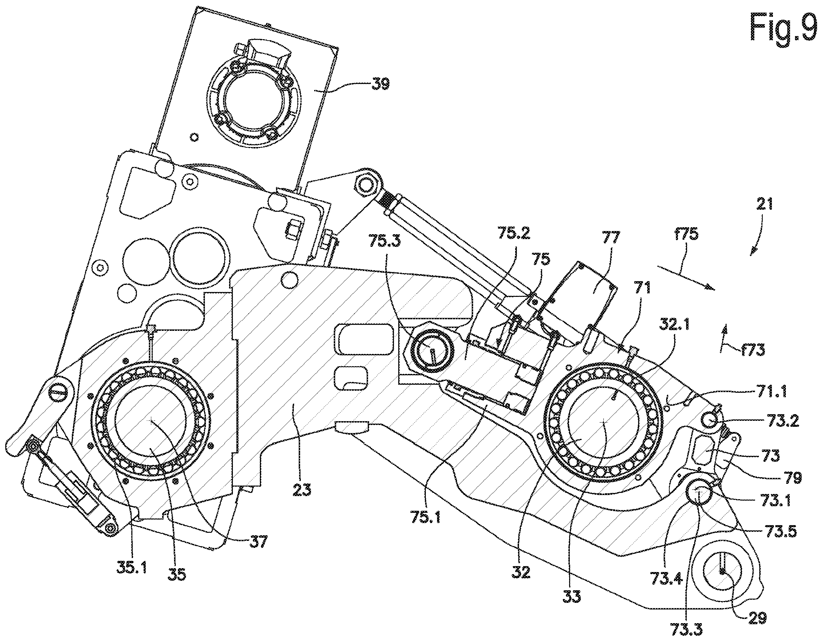

In the illustrated embodiment, the first support 32.1 of the first guide roller 32 and the second support 32.2 of the first guide roller are mounted in respective movable units, one of which is shown in detail in the section of Fig.9, indicated with the reference number 71. The supports 32.1 and 32.2 are pivoting supports, i.e. they allow for a variation in the inclination of the rotation axis 33 of the first guide roller 32, for the purposes and in the ways described below.

The movable unit 71 contains the first support 32.1 of the first guide roller 32 and connects it to the first pivoting arm 23 as described below. The second support 32.2 of the first guide roller 32 is mounted in the same way, with a similar movable unit 72, on the second pivoting arm 25, see especially Figs. 6, 6A, 7, 8, and 9.

With specific reference to Fig.9, the movable unit 71 has a seat 71.1 for the first support 32.1 of the first guide roller 32. The movable unit 71 is constrained to the pivoting arm 23 by means of a rocker arm 73, which is pivoted, at one end, to the movable unit 71 and, at the opposite end, to the pivoting arm 23. The axes for pivoting the rocker arm 73 to the arm 23 and to the movable unit 71, respectively, are indicated with 73.1 and 73.2.

The movable unit 71 is further constrained to the pivoting arm 23 by means of a first actuator 75 for adjusting the traction of the continuous flexible member 31. In the illustrated embodiment, the first actuator 75 is a linear actuator, for example a cylinder-piston actuator, preferably of the double-acting hydraulic type.

In the illustrated embodiment, the actuator 75 comprises a cylinder 75.1 formed in the movable unit 71, within which a piston 75.2 slides. The stem of the piston 75.2 is in turn pivoted to the first pivoting arm 23 at 75.3. The movement of the actuator 75 causes a pivoting of the rocker arm 73 and a consequent movement of the rotation axis 33 of the first guide roller 32 relative to the pivoting arm 23.

A similar arrangement is provided for connecting the second support 32.2 of the first guide roller 32 to the second pivoting arm 25.

By acting on the two actuators 75 associated with the two supports 32.1 and 32.2 it is possible to change the traction of the continuous flexible member 31 due to the variation of the distance between the rotation axes 33 and 37 of the two guide rollers 32, 35.

The two actuators 75 on the two sides of the single facer 1 can be actuated independently of each other, in the sense that they allow independent adjustments of the position of the respective support 32.1 and 32.2 of the first guide roller 32 relative to the corresponding support 35.1 and 35.2 of the second guide roller 35. In this way it is possible to keep the continuous flexible member 31 properly tensioned, and it is also possible to control and to correct the twisting thereof. The independent actuation of the actuators 75 allows to modify the inclination of the rotation axis 33 of the first guide roller 32, so that it is not perfectly parallel to the rotation axis 37 of the second guide roller 35. This change in the inclination can be used, for example, to balance or to correct a twisting of the continuous flexible member 31.

The actuators 75 can be controlled by a control unit 101 (Fig.6A), based on signals coming from sensors, with which the single facer 1 is equipped, some of which will be described below with specific reference to Figs. 6 and 6A. For example, to control the tension of the continuous flexible member 31, it is possible to provide load cells that detect the traction on the continuous flexible member 31, the traction corresponding to a determined pressure against the second corrugating roller 17, and thus a determined bonding pressure between the smooth paper web and the fluted paper web. Alternatively, the traction can be determined simply as a function of the pressure of the hydraulic fluid, with which the 75 actuators are controlled.

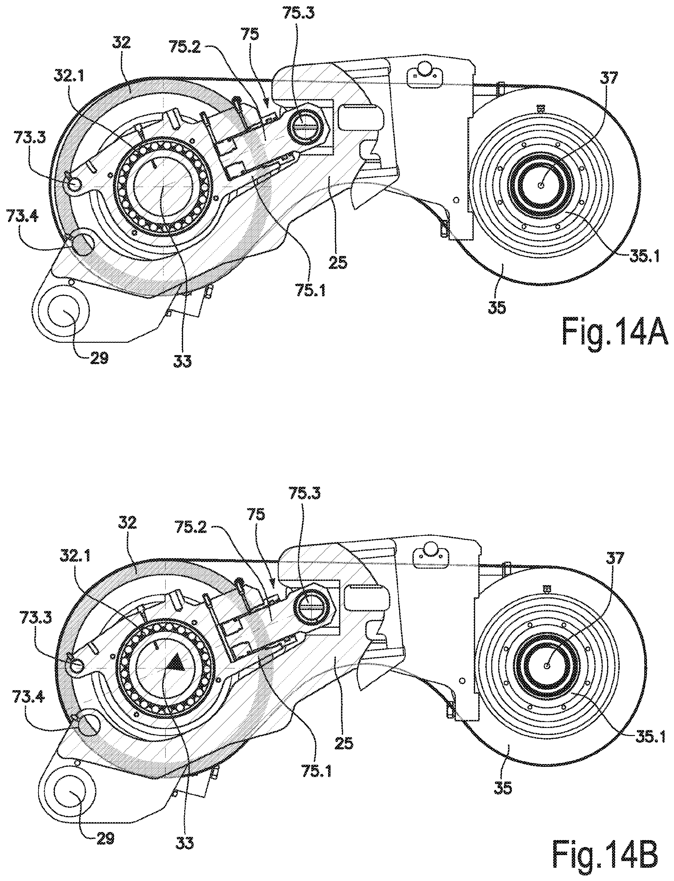

Figs. 14A and 14B show in more detail how to perform the control of the traction on the continuous flexible member by simultaneously actuating the actuators 75.

In Fig.14A the continuous flexible member 31 is not in traction, while in Fig.14B it is in traction due to an equal elongation of the two actuators 75 and a consequent movement of the guide roller 32 away from the guide roller 35, keeping the axes of the two guide rollers parallel to each other.

In addition to system for controlling the tension and twisting of the continuous flexible member 31, the single facer 1 comprises members to keep the continuous flexible member 31 properly in position during the operation of the single facer 1, avoiding lateral shifting thereof. To this end, as described in detail below, sensors may be provided, which detect the position of the two longitudinal edges of the continuous flexible member 31 and interface with the control unit 101 to perform, through this latter, cycles for correcting the position of the continuous flexible member 31, if needed. More specifically, based on the signals coming from these sensors, it is possible to correct possible displacements of the continuous flexible member 31 by acting differentially on the two actuators 75 and thus causing a change in the inclination of the rotation axis 33 of the first guide roller 32 in order to correct any twisting of the continuous flexible member 31, as described in more detail below.

In addition, through the same sensors it is possible to correct any lateral shifting of the continuous flexible member 31. To this end, members are provided that allow for a movement of the rotation axis of one of the guide rollers orthogonally to the plane on which the rotation axes of the two guide rollers 32, 35 lie under normal operating conditions of the single facer 1.

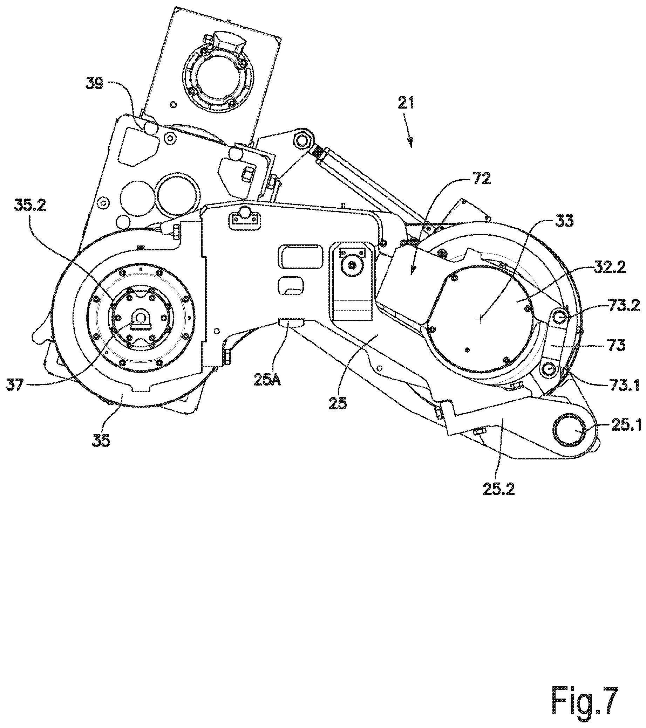

In the illustrated embodiment, the members that enable this movement are described below. In the illustrated example, the guide roller provided with the movement for correcting the lateral shifting of the continuous flexible member 31 is the guide roller 32. The pivot axis 73.1 of the rocker arm 73 associated with the pivoting arm 25 is fixed (see Fig.7). Conversely, the pivot axis 73.1 of the rocker arm 73 associated with the pivoting arm 23 is movable, so as to impart a further adjustment movement to the first guide roller 32. This further movement will be better understood making reference to Figs. 8, 9, and 10. The pivot axis 73.1 of the rocker arm 73 associated with the first pivoting arm 23 consists of an eccentric 73.3 that is housed in a seat 73.4 of the pivoting arm 23 (see Fig.9). The eccentric 73.3 rotates in the seat 73.4 around an axis 73.5 parallel to the pivot axis 73.1 of the rocker arm 73 but spaced therefrom. In the illustrated embodiment, the rotation of the eccentric 73.3 is controlled by a linear actuator 77, for example an electrically controlled jack, by means of a lever 79 (see Fig.8).

The rotation of the eccentric 73.3 about the axis 73.5 causes a displacement of the pivot axis 73.1 of the rocker arm 73 with respect to the pivoting arm 23. In Fig. 9, the approximate direction of this displacement is indicated with f73. This direction is transverse to the direction of displacement imparted by the linear actuator 75, indicated by f75. In this way, on the side of the first pivoting arm 23, the first support 32.1 of the first guide roller 32 can be displaced according to two directions that are substantially orthogonal to each other. The displacement according to arrow f75 (Fig.9) imparted by actuator 75 is used to adjust the traction and twisting of the continuous flexible member 31 and can be coordinated with a corresponding movement imparted by the corresponding actuator 75 of the second support 32.2. The displacement imparted by the actuator 77 by means of the eccentric 73.3 can be used to correct displacements of the continuous flexible member 31, for example, a lateral shifting, parallel to the rotation axes of the guide rollers 32, 35. A homologous displacement of the support 32.2 on the side of the second pivoting arm 25 is not necessary.

Figs. 6A, 13A to 17B show further details useful for understanding the control of the position of the continuous flexible member 31 through the movements imparted to the guide rollers by the mechanical members and the actuators 75, 77 described above.

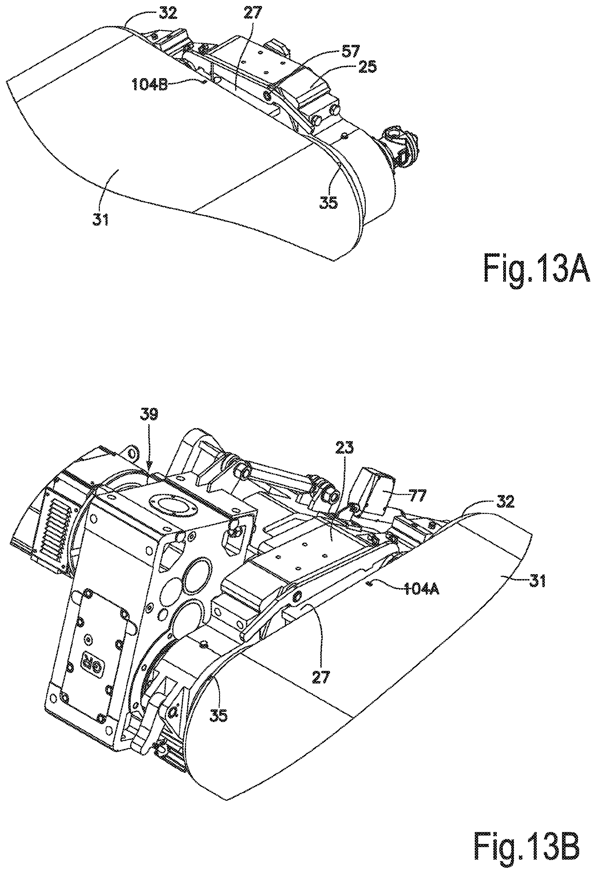

More specifically, Figs. 6A, 13A and 13B show an axonometric view of details of the pivoting arms 23, 25 and of the continuous flexible member 31 driven around the guide rollers 32 and 35. Fig.6A is similar to Fig.6, but shows the continuous flexible member 31 partially removed to illustrate the sensors for detecting the position of the two longitudinal edges 31A, 31B of the continuous flexible member 31. When the single facer 1 is operating and the continuous flexible member 31 is properly positioned, the latter moves according to a forward direction f31 (Fig.6A) oriented at 90° with respect to the rotation axes 33 and 37 of the guide rollers 32 and 35 and parallel to the longitudinal edges 31A, 31B. In addition, the continuous flexible member 31 is basically centered with respect to a median plane, i.e. a median vertical plane M-M (Figs.6, 6A) of the single facer 1, thus centered with respect to the pivoting arms 23, 25.

Figs. 6A, 13A, and 13B show sensors for detecting displacements of the continuous flexible member 31, which provide signals to the control unit 101 that controls the actuators described above, to keep the continuous flexible member 31 in the correct position.

In the following description, specific reference will be made to a particularly advantageous embodiment of the sensor system, which employs magnetic sensors. These latter are robust and insensitive to factors that may adversely affect the operation of other types of sensors, such as the optical sensors that may be affected by the presence of dust or other dirt. Alternatively, capacitive sensors can be used, for example. Optical sensors can even be used, although currently less preferred because of their sensitivity to dust.

In the illustrated embodiment, a set of magnetic sensors is arranged on each side of the pressing unit 21, and is schematically illustrated in Fig.6A, where part of the continuous flexible member 31 has been removed on both sides to show the underlying magnetic sensors.

More specifically, in the embodiment of Fig.6A a first set 103A of three magnetic sensors is provided, associated with the side of the pressing unit 21 on which the pivoting arm 23 is arranged, and a second set 103B of magnetic sensors is provided on the side of the pressing unit 21 on which the pivoting arm 25 is arranged. In the illustrated example, each set 103A, 103B of magnetic sensors includes three magnetic sensors. Each individual magnetic sensor is indicated by reference number 103. The six magnetic sensors of the two sets 103A, 103B are aligned along a direction D, orthogonal to the forward direction f31 of the continuous flexible member 31, and thus orthogonal to the vertical median plane M-M. However, this arrangement is not strictly necessary. In other embodiments, the magnetic sensors 103A are aligned with one another in the direction D, the magnetic sensors 103B are aligned with one another in the direction D, but the two sets of sensors 103A, 103B can be offset from each other by a known distance in a direction orthogonal to the direction D. In fact, as it will be clearly apparent below, what is important is that the distance between the two sets of sensors in the forward direction of the continuous flexible member 31 is known.

The set 103A of magnetic sensors is adapted to detect the passage of a magnet 104A fastened to, or embedded in, the continuous flexible member 31, near the longitudinal edge 31A. The set 103B of magnetic sensors is adapted to detect a magnet fastened to, or embedded in, the continuous flexible member 31 near the longitudinal edge 31B. To this end, the magnetic sensors 103 are mounted on the pressing unit 21 in side position, near the pivoting arms 23, 25. For example, the sensors 103 can be mounted to emerge on a sliding surface 106 (Fig.6A) of the continuous flexible member 31. In the illustrated embodiment, the sliding surface 106 consists of the upper surface of the beam 27 that connects the pivoting arms 23, 25.

In the illustrated embodiment, the magnets 104A, 104B are fastened to the continuous flexible member 31, e.g. embedded in the thickness thereof, in such a position that, when the continuous flexible member 31 is properly positioned on the guide rollers 32, 35, the magnets 104A, 104B are aligned with one another according to the direction D, i.e. parallel to the alignment of the two sets 103A, 103B of magnetic sensors and orthogonal to the forward direction f31 of the continuous flexible member 31. However, this arrangement is not strictly necessary. What is important is that the distance between the magnet 104A and the magnet 104B in the forward direction of the continuous flexible member 31, when the latter is correctly positioned on the guide rollers 32, 35, is known.

When the continuous flexible member 31 is centered with respect to pivoting arms 23, 25 and thus with respect to the vertical median plane M-M, the mutual position of the magnets 104A, 104B relative to the magnetic sensors 103A, 103B is such that the trajectory, along which the magnet 104A moves when the continuous flexible member 31 moves around the guide rollers 32, 35, intercepts the central magnetic sensor 103 of the set 103A of magnetic sensors, and the trajectory, along which the magnet 104B moves, intercepts the central magnetic sensor 103 of the set 103B of magnetic sensors.

In addition, since under proper operating conditions the magnets 104A, 104B are aligned in the direction D, they simultaneously intercept the respective central magnetic sensors of the sets 103A, 103B of magnetic sensors. The simultaneous signal from the magnetic sensors 103A, 103B indicates the absence of twisting. However, as mentioned above, it is not necessary that the two magnets 104A, 104B be aligned along the direction D. They can be offset by a known distance. Below the explanation will be provided of how an offset placement of the magnets still allows to control the twisting of the continuous flexible member 31.

The assembly formed by the magnetic sensors 103A, 103B, the magnets 104A, 104B, and the control unit 101 allows the correct position of the continuous flexible member 31 to be controlled and maintained during the operation of the single facer 1, as describe below.

As mentioned, a twisting of the continuous flexible member 31 occurs when one of its longitudinal edges 31A, 31B advances slower than the other. This causes a mutual offset of the two magnets 104A, 104B along the forward direction of the continuous flexible member 31. In practice, in case of twisting of the continuous flexible member 31, the two magnets 104A, 104B are longer aligned along a direction D orthogonal to the direction f31, but rather the line joining them will be arranged inclined at an angle other than 90° relative to the direction f31. The occurrence of this situation is detected by the control unit based on a time offset of the signals coming from the two sets 103A, 103B of sensors.

If the two magnets 104A, 104B are not aligned but offset with respect to one another in the longitudinal direction, i.e. in the direction of extension of the edges of the continuous flexible member 31, the control unit 101 can determine, based on the amount of offset and the speed of the continuous flexible member 31, which is the correct time interval between the detection of the passage of the magnet 104A in front of the sensors 103A and the detection of the passage of the magnet 104B in front of the sensors 103B. In case of twisting of the continuous flexible member 31, this time interval changes, and the control unit 101 can detect the change in the time interval, thus obtaining information about the occurrence of a twisting. If an encoder is provided on the main motor that controls the movement of the continuous flexible member 31, in addition to detecting a time interval indicative of twisting, it is also possible to detect the extent of the offset between the two longitudinal edges of the continuous flexible member 31 in terms of length.

In general, a twisting condition is detected through a delay of a signal from the sensors of one set of 103A, 103B with respect to the signal from the sensors of the other set 103A, 103B. If, for example, the longitudinal edge 31A moves forward faster than the longitudinal edge 31B, the passage of the magnet 104A in front of the magnetic sensors 103A will be earlier than the passage of the magnet 104B in front of the magnetic sensors 103B, and thus the signal of the magnetic sensors 103A will be temporally earlier than the signal of the magnetic sensors 103B. Also in the case of originally misaligned magnets, twisting still results in an alteration (increase or decrease) in the time offset of the signals generated by the two sensors.

This time offset provides the control unit 101 with information about the need to perform a correction cycle through differential actuation of the two actuators 75.

The correction is performed in the following way. The control unit 101 acts on the actuators 75 in such a way as to increase the tension of the continuous flexible member 31 on the side on which a slowdown is detected. If the longitudinal edge moving slower is the longitudinal edge 31B, the control unit 101 will induce such a differential tension between the two sides of the continuous flexible member 31 that the tension on the side of the edge 31A is lower than the tension on the side of the edge 31B. To this end, it is appropriate to keep the tension on the edge 31A and to increase the tension on the edge 31B by acting on the respective actuator 75 so that the supports of the guide roller 32, 35 are moved away from each other on the side of the longitudinal edge 31B. A reverse action shall be performed if the longitudinal edge moving slower is the longitudinal edge 31A.

This adjustment is based on the following consideration. If one of the two longitudinal edges is slower (i.e., the passage of the magnet associated with the slower edge is detected later than the passage of the magnet on the other side), considering that the tangential velocity of the flexible member 31 is the same over the entire span (i.e. over the entire width of the continuous flexible member 31), it means that the delayed edge of the continuous flexible member 31 is traveling a longer path. Therefore, it is necessary to lengthen the path of the edge of the opposite side to compensate the twisting of the flexible member.

The gradual realignment of the two magnets 104A, 104B along the direction D is detected by the control unit 101, which detects a reduction in the time offset between the signals generated by the set 103A and by the set 103B of sensors.

Once the time offset of the signals has become null, i.e. when the twisting has been corrected, the control unit 101 could theoretically return the actuator 75, whose tension it had increased, to its original value, i.e. it could return the two actuators 75 to exert the same tension on the continuous flexible member 31. This is a neutral position of the actuators responsible for controlling the twisting.

However, this mode of operation is not optimal. In fact, the twisting of the continuous flexible member 31 is due to one or more external causes, which are neither detected nor removed. Therefore, once the control unit 101 has returned the actuator 75 to the condition prior to the start of the correction cycle, the continuous flexible member 31 will tend to twist again. As a result, in a short time the control unit 101 shall intervene again with a new twisting correction cycle.

This situation, which requires repeated and frequent interventions for correcting the twisting of the continuous flexible member 31, may persist even for long periods of time, resulting in stress on the continuous flexible member 31 and adversely affecting the quality of the obtained product (corrugated board).

In order to avoid this negative condition, and to prevent the continuous flexible member 31 from twisting again, the control unit 101 is programmed, i.e. configured, to keep an offset between the tension applied on the continuous flexible member 31 by the two actuators 75.

In practice, the position reached by the actuators 75 after twisting has been corrected is a position intermediate between the initial position, i.e. the position taken at the beginning of the correction cycle, and the position taken during the correction cycle. The initial position can be the neutral position, where the two actuators 75 have such a position that the path traveled by the edge 31A of the continuous flexible member 31 is equal to the path traveled by the edge 31B of the continuous flexible member 31. This, however, is not always true. In fact, the correction cycle can be activated after the control unit 101 has performed a previous correction cycle that ended by returning the two actuators 75 to positions that are not identical to each other (paths of the two edges 31A, 31B not identical to each other), but rather with some offset to compensate the twisting tendency of the continuous flexible member 31.

It is also possible that the twisting correction cycle activated at a given time is such that it performs a correction opposite to that made by the previous correction cycle. This can happen if the factors leading to twisting of the continuous flexible member 31 substantially change over time. For example, a first correction cycle has resulted in lengthening the path traveled by the edge 31A with respect to the path traveled by edge 31B, with elongation of the actuator 75 arranged on the side of the edge 31A. The offset kept at the end of this correction cycle is such that the actuator 75 on the side of the edge 31A is more elongated than the actuator 75 on the side of the edge 31B. If the operating conditions change, it may happen that the continuous flexible member 31 undergoes, at some point, a twisting opposite with respect to the previous one. In this case, the offset set in the previous correction cycle accelerates the twisting and thus causes the control unit 101 to intervene more quickly to correct the twisting, with a shortening of the path of the edge 31A and/or a lengthening of the path of the edge 31B. Such a condition, however, is rare, whereas typically the offset set at the previous correction cycle compensates for the twisting tendency and thus in practice reduces the frequency of the interventions for correcting the twisting.

In other words, if the detected twisting has been caused by a slowing down of the edge 31B of the continuous flexible member 31, and thus the correction resulted in an increase in the tension on the side of the edge 31A (and thus in an increase in the path of that edge), when the twisting has been corrected and the two magnets 104A, 104B are again aligned along the direction D, parallel to the forward direction f31 of the continuous flexible member 31 (or their offset has been restored to the initial value), the control unit 101 will be able to reduce the traction exerted by the actuator 75 on the side that was faster, i.e. whose path has been lengthened to correct the twisting (in the example, the side of the edge 31A), but keeping that traction slightly higher than that on the opposite side (side of the edge 31B) that was slower. This offset compensates for the factor that caused the twisting and thus prevents the continuous flexible member 31 from twisting again, or at least it reduces the twisting magnitude or speed.

Thus, in general, the twisting correction involves the application of a differential tension between the two longitudinal edges 31A, 31B of the continuous flexible member 31, such as to cause an elongation of the path traveled by the faster edge. At the end of the correction, i.e. when the two magnets 104A, 104B have returned to the position of mutual alignment in the direction D (or to the original mutual distance in the direction orthogonal to the D direction), the control unit 101 reduces the tension difference, keeping a residual difference adapted to counteract the newly corrected twisting.

It should be understood that, in order to have smooth operation, the control unit 101 shall intervene to correct a twisting when the time offset of the signals coming from the two sets 103A, 103B of sensors exceeds a tolerance time threshold, so as to avoid continuous corrections even in the case of minor twisting. The time interval between twisting correction intervals, the duration and entity thereof (force applied to the piston, correction time, amount of the twisting detected by the sensors) allow the control unit 101 to constantly refine the offset value with the aim of always achieving the maximum system stability. Variable temperatures, characteristics of the processed paper webs, wear and changes over time of the continuous flexible member 31 will always cause small variations that need to be compensated.

In some embodiments, when the actuators 75 exert the correction action by applying a higher pressure from the appropriate side, a direct action of the control unit 101 is not used to keep the pressure. Instead, the pressure can be kept by closing the pressure fluid circuit (typically oil) actuating the actuators 75. Specific block valves can be provided to this end. The set pressure is monitored through a pressure sensor for each actuator 75. When the twisting correction is finished, or if, for any reason, the target pressure deviates by a certain extent from the desired threshold, the system intervenes firstly by bringing its pressure to the same level of pressure inside the cylinders of the two actuators 75, opening the block valve and adjusting the pressure to the correct value through the hydraulic control unit.

In further embodiments other types of actuators, preferably linear actuators, can be used as an alternative to the cylinder-piston actuators 75. For example, an action identical to that described above can be achieved by means of a jack equipped with a load cell to detect the tension.

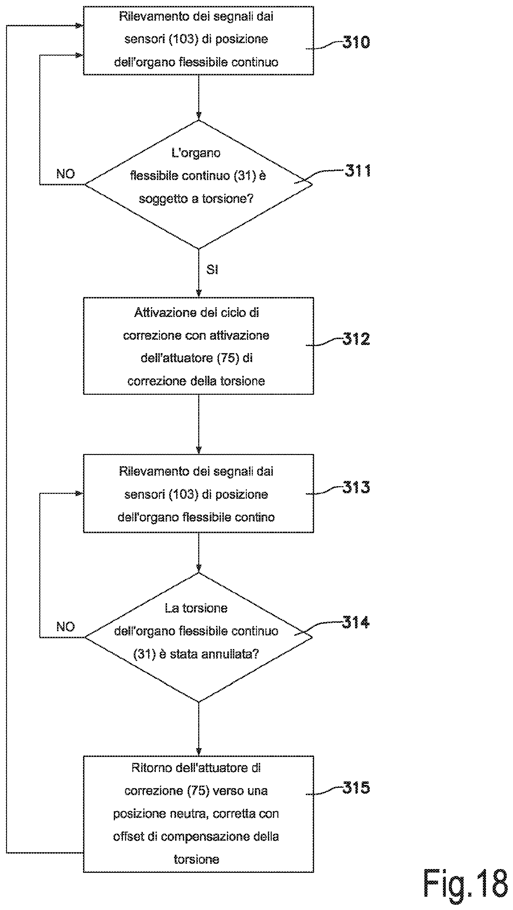

The flow chart of Fig. 18 summarizes the cycle for correcting a twisting of the continuous flexible member 31. Briefly, the process of controlling and correcting the twisting is performed as follows. The position of the continuous flexible member 31 (block 311) is detected by the sensors 103. Based on the signals received from the sensors 103, the control unit 101 checks whether the continuous flexible member 31 is twisted (block 312). If not, no correction is made. If yes, the cycle for correcting the twisting is carried out activating either of the actuators 75 (block 313). At this stage, either of the actuators 75 changes the length of the path traveled by the respective longitudinal edge 31A, 31B, depending on the received signals. In principle, it is also possible that the intervention is performed by both the actuators 75, which can move in opposite directions. Once the correction cycle is finished, the control unit 101 checks, based on the signals received from the sensors 103, whether the twist has been eliminated (block 314). If not, the actuator 75, activated during the correction cycle, remains in the activated position. If yes, i.e. if the twisting has been eliminated, the actuator 75, activated during the correction cycle, is returned to a position intermediate between the initial position and the position taken in block 312 (block 315). In practice, the previously activated actuator 75 is brought to the neutral position, except for a slight offset. The correction cycle is finished and the control returns to the block 310.

Any lateral shifting of the continuous flexible member 31 are detected and corrected as described below, using the magnetic sensors 103 and the control unit 101.

When the continuous flexible member 31 translates or shifts transversally to the forward direction, moving towards either of the two pivoting arms 23, 25, the longitudinal edges 31A, 31B translate along the direction D of alignment of the magnetic sensors 103. This lateral shifting can be detected by means of one of two sets 103A, 103B of magnetic sensors. In fact, the position of the magnetic sensors 103 is such that in the centered position, when the flexible member 31 is centered with respect to the vertical median plane of the two pivoting arms 23, 25, and the two side edges 31A, 31B are equidistant from the vertical median plane, the trajectory of the magnets 104A, 104B passes over the central magnetic sensor of each of the two sets 103A, 103B of sensors.

Consequently, if the continuous flexible member 31 shifts laterally, i.e. moves parallel to the rotation axes of the guide rollers 32, 35, the trajectory of both the magnets 104A, 104B also moves and intercepts one of the lateral magnetic sensors of each set 103A, 103B. If the continuous flexible member 31 shifts laterally moving towards the pivoting arm 25, the magnet 104B adjacent to the longitudinal edge 31B translates until the trajectory thereof intercepts the outermost sensor 103 of the set 103B, while the magnet 104A translates until the trajectory thereof intercepts the innermost sensor 103 of the set 103A. Depending on the size of the magnet and the distance between the magnetic sensors, the transverse shifting may be intercepted by only one magnetic sensor (thus the passage from the central magnetic sensor to one of the side magnetic sensors) or can be intercepted by two magnetic sensors simultaneously.

The control unit 101 can be programmed to detect such a displacement, through the signals coming from the magnetic sensors 103. To this end, it is sufficient to process the signals of only the magnetic sensors 103 of the set 103A or the magnetic sensors 103 of the set 103B.

In practical embodiments, only one of the two sets 103A, 103B of sensors is used for shifting control. In this way, although the initial position of the flexible member 31 is perfectly central, shifting is controlled during operation by controlling only one of the two longitudinal edges of the flexible member 31. In fact, during operation, while on the controlled edge, for example, the central sensor detects the magnet, on the opposite edge it is possible that the magnet is being detected through the outermost sensor due to a possible expansion in the transverse direction of the flexible member, which sensitive to temperature changes. The sensors 103 are arranged at appropriate distances so that, even in case of maximum expansion of the flexible member 31, one of the three sensors placed on each side is always able to detect the respective magnet. This ensures a continuous twisting control, regardless of the transverse expansion of the flexible member.

Any thermal expansion of the continuous flexible member may result in an insignificant shifting of the continuous flexible member relative to the median plane, due to the fact that the transverse position of the continuous flexible member is detected by reading only one longitudinal edge. Substantially, by keeping the transverse position of one of the two longitudinal edges of the continuous flexible member under control, the thermal expansion can cause a lateral translation of the other of the two longitudinal edges. This translation, however, is small and is acceptable. The use of a system that detects any transverse shifting of the continuous flexible member by checking the position of only one of its longitudinal edges is substantially simpler.

When the control unit 101 detects a lateral displacement due to the shifting of the continuous flexible member beyond a threshold value, it initiates a correction cycle. The correction involves actuating the actuator 77, which causes the rotation axis of the guide roller 32 to move in such a direction that the rotation axis 33 becomes skewed with respect to the rotation axis 37. If the rotation axis 33 and the rotation axis 37 are initially coplanar, the correction cycle involves moving the rotation axis 33 away from the original lying plane of the rotation axes 33 and 37.

The displacement of the rotation axis 33 causes the continuous flexible member 31 to return gradually toward its centered position. When, through the signal from the magnetic sensors 103, the control unit 101 detects that the continuous flexible member 31 is again centered, it is theoretically possible to return the rotation axis 33 of the guide roller 32 to a position coplanar with the rotation axis 37 of the guide roller 35. This position is a neutral position of the actuator that controls the lateral shifting.

However, this operating mode is not optimal. In fact, the lateral shifting of the continuous flexible member 31 is due to one or more external causes, which are neither detected nor removed. Therefore, once the control unit 101 has returned the actuator 77 to the conditions prior to the start of the correction cycle, with the rotation axes 33 and 37 coplanar, the continuous flexible member 31 tends again to shift in the same direction that led to the previous corrective intervention. As a result, in a short time the control unit 101 shall intervene again with a new cycle to correct the lateral position of the continuous flexible member 31.

This situation, which requires repeated and frequent interventions for correcting the shifting, i.e. the lateral translation, of the continuous flexible member 31, can persist even for long periods of time, resulting in stress on the continuous flexible member 31 and adversely affecting the quality of the obtained product (corrugated board).

To avoid this inconvenience, instead of returning the two guide rollers 32, 35 with their respective rotation axes exactly coplanar, the control unit 101 is so configured as to maintain a slight offset, i.e. a slight inclination of the guide roller 32 with respect to the condition of coplanarity between the rotation axes, so that its rotation axis 33 remains slightly tilted from its nominal position, parallel to the rotation axis 37 of the guide roller 35. The offset is such as to compensate, i.e. to counterbalance, the tendency of the continuous flexible member 31 to translate, by slowing down or eliminating the translation movement. Substantially, if the shifting correction cycle has been carried out by moving the rotation axis 33 of the guide roller 32 above the original lying plane of the rotation axes 33, 37, once the continuous flexible member 31 is returned to the centered position, the rotation axis 33 is returned toward the condition of coplanarity with the rotation axis 37, but not perfectly coplanar with it, but rather kept slightly above the coplanar plane. Vice versa if the shifting correction has been made by moving the rotation axis 37 downward.

The slight offset in the angular position of the rotation axis 33, which is maintained once the continuous flexible member 31 has achieved the centered position, compensates for spurious factors that tend to cause the continuous flexible member to shift laterally, such as mechanical tolerances, the characteristics of the processed paper sheets, and the accumulation of dirt on the moving members. By keeping this offset, a new shifting movement is slowed down or eliminated.

It is also possible that the shifting correction cycle activated at a given time is such as to perform a correction opposite to that made by the previous correction cycle. This can happen in case the factors leading to the shifting of the continuous flexible member 31 substantially change over time. For example, in a first correction cycle the rotation axis 33 of the guide roller 32 may have been raised to bring the continuous flexible member 31 back to its centered position. The offset kept at the end of this first correction cycle is such that the actuator 77 keeps the rotation axis 33 slightly raised relative to a neutral position of coplanarity with the rotation axis 37 of the guide roller 35. If the operating conditions change, it may happen that the continuous flexible member 31 undergoes, at some point, a shifting opposite to the previous one. The offset set at the previous correction cycle in this case accelerates the shifting movement, and thus causes the control unit 101 to intervene more quickly to correct the shifting. In this case, the control unit 101 activates the actuator 77 to tilt the rotation axis 33 below the neutral position, i.e. below the plane of coplanarity of the rotation axes 33, 37. However, such a condition is rare, while typically the offset set at the previous correction cycle compensates the shifting tendency and, thus, in practice reduces the frequency of the interventions for correcting the shifting.

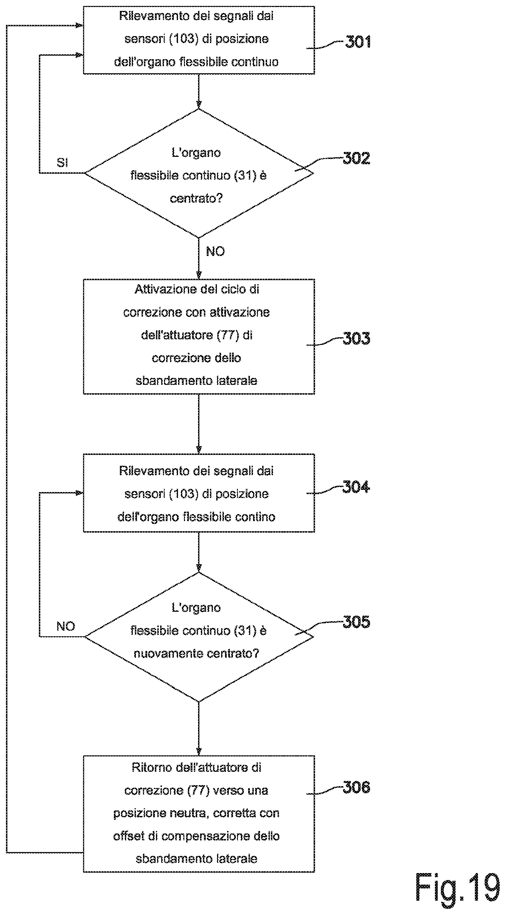

The flow chart of Fig. 19 summarizes the cycle for correcting a lateral shifting of the continuous flexible member 31. Briefly, the process of controlling and correcting the shifting is performed as follows. The position of the continuous flexible member 31 (block 301) is detected by the sensors 103. Based on the signals received from the sensors 103, the control unit 101 checks whether the continuous flexible member 31 is laterally translated (block 302). If not, no correction is made. If yes, the cycle for correcting the shifting is carried out activating the actuator 77 (block 303). At this stage, the actuator 77 causes a tilting of the rotation axis 33 of the guide roller 32 based on the signals received. The displacement may be upward or downward, depending on the direction in which the lateral shifting of the continuous flexible member 31 occurred. Once the correction cycle has been actuated, the control unit 101 checks, based on the signals received from the sensors 103, whether the shifting has been eliminated (block 304) and whether the continuous flexible member 31 has returned to its centered position. If not, the actuator 77 remains in the activated position. If yes, i.e. if the shifting has been eliminated, the actuator 77 is returned to a position intermediate between the initial position and the position taken in block 302 (block 305). In practice, the actuator 77 is brought to the neutral position, except for a slight offset. The correction cycle is finished and the control returns to the block 301.

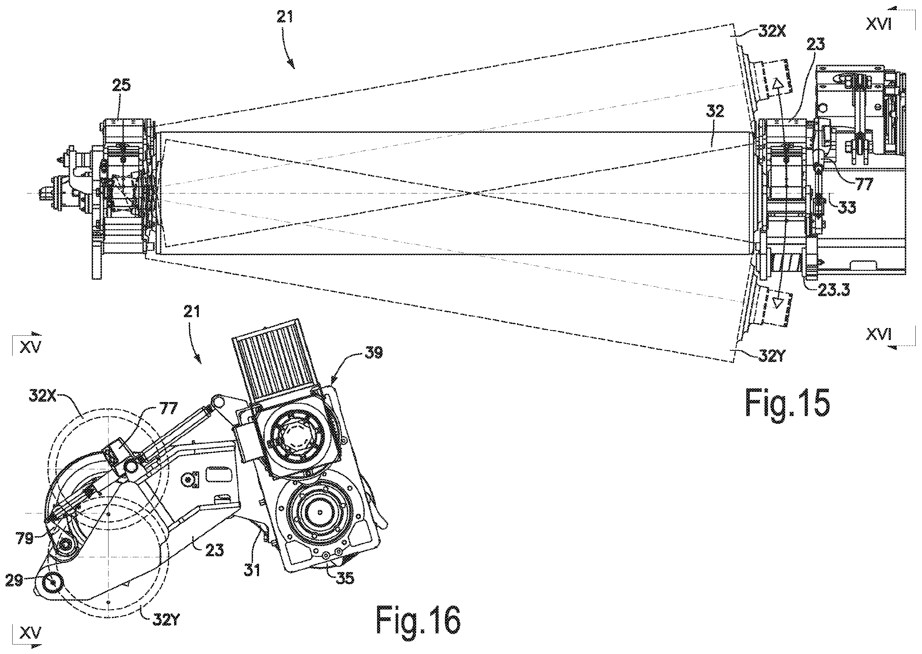

Figs. 15 and 16 show the displacements of the first guide roller 32 caused by the linear actuator 77 to correct lateral shifting movements of the continuous flexible member 31. More in particular, Fig.15 is a back view according to XV-XV of Fig.16, and Fig.16 is a side view according to XVI-XVI of Fig.15, of the pressing unit 21. 32X and 32Y indicate two tilted positions of the first guide roller 32. For the sake of clarity, the displacements are represented as much greater than they actually are.

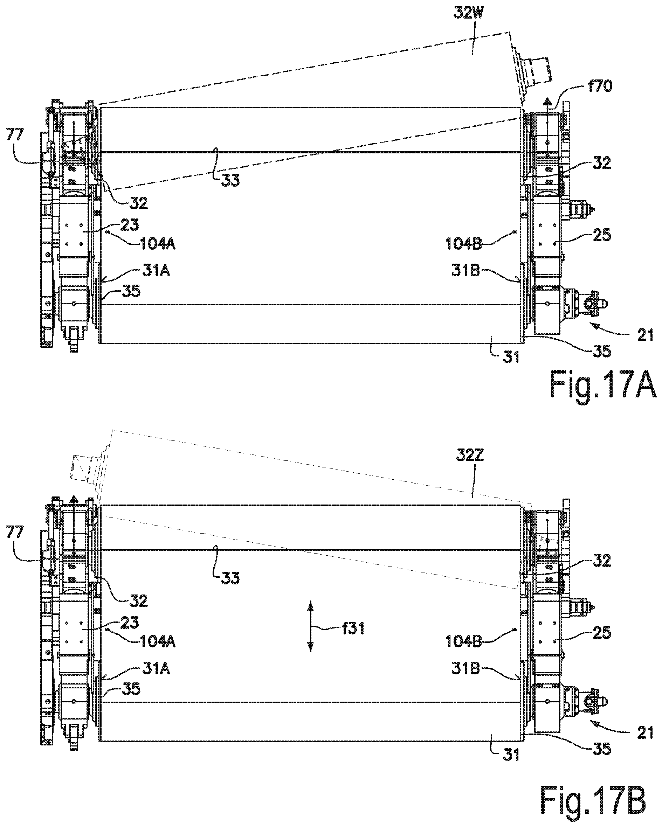

Figs. 17A and 17B show, in a top view of the pressing unit 21, the displacements of the first guide roller 32 controlled by differential strokes of the actuators 75 to correct any twisting of the continuous flexible member 31. 32Z and 32W indicate positions of the first guide roller 32 tilted in opposite directions, obtained by differential actuations of the actuators 75. For the sake of clarity, like in Figs. 15 and 16, also in Figs. 17A, 17B the displacements are represented as much greater than they actually are.

The invention has been described above in various embodiments. It is however clearly apparent to those skilled in the art many modifications, changes and omissions can be done to the invention without however departing from the protective scope as defined in the attached claims.

## Claims

1. A single facer (1) for producing single-face corrugated board, comprising:
a) a first corrugating roller (15) and a second corrugating roller (17), meshing with each other;
b) a support structure, comprising a first arm (23) on a first side of the single facer (1) and a second arm (25) on a second side of the single facer (1);
c) a first guide roller (32) with a first rotation axis (33), supported through a respective first support (32.1) on the first arm (23) and through a respective second support (32.2) to the second arm (25);
d) a second guide roller (35) with a second rotation axis (37), supported through a respective first support (35.1) on the first arm (23) and through a respective second support (35.2) on the second arm (25);
e) a continuous flexible member (31), driven around the first guide roller (32) and the second guide roller (35) and having a first longitudinal edge (31A) and a second longitudinal edge (31B), the first longitudinal edge and the second longitudinal edge extending parallel to a forward direction of the continuous flexible member (31);
f) an adjusting and guiding arrangement for adjusting and guiding the continuous flexible member (31), comprising:
f1. sensors (103) adapted to detect a lateral shifting and a twisting of the continuous flexible member (31); and
f2. actuators (75, 77) adapted to modify the mutual position of the first guide roller (32) and of the second guide roller (35);
f3. a control unit (101) configured for:
(a) activating the actuators (75, 75, 77) based on signals received from the sensors (103) and performing a correction cycle by modifying the mutual position of the first guide roller (32) and of the second guide roller (35) from an initial position to a correction position causing a correction of the lateral shifting and the twisting;
**characterised in that** the control unit is further configured for once the lateral shifting and the twisting has been removed or corrected, bringing the first guide roller (32) and the second guide roller (35) in an intermediate position between the initial position and the correction position.

2. The single facer of claim 1, wherein the adjusting and guiding arrangement for adjusting and guiding the continuous flexible member (31) comprises:
- a first actuator (75) associated with the first arm (23) and adapted to adjust the distance between the first support (32.1) of the first guide roller (32) and the first support (35.1) of the second guide roller (35);
- a second actuator (75) associated with the second arm (25) and adapted to adjust the distance between the second support (32.2) of the first guide roller (32) and the second support (35.2) of the second guide roller (35), the first actuator (75) and the second actuator (75) being actuatable independently of each other;
wherein the control unit (101) is configured to differentially act on the first actuator and on the second actuator based on the signal from the sensors (103), to correct a twisting of the continuous flexible member (31).

3. The single facer of claim 2, wherein the control unit (101) is programmed in such a way that, when the sensors (103) detect a twisting of the continuous flexible member (31), the control unit (101) performs a correction cycle for correcting the twisting, causing a variation in the distance between the first support (32.1) of the first guide roller (32) and the first support (35.1) of the second guide roller (35) with respect to the distance between the second support (32.2) of the first guide roller (32) and the second support (35.2) of the second guide roller (35); the variation changing the relative position of the first guide roller (32) and of the second guide roller (35) from the initial position to the correction position; the variation being such as to reduce or to remove the twisting of the continuous flexible member (31).

4. The single facer (1) of claim 2 or 3, wherein the first actuator (75) and the second actuator (75) are linear actuators, in particular cylinder-piston actuators or mechanical jacks.

5. The single facer (1) of one or more of claims 2 to 4, wherein: the first support (32.1) of the first guide roller (32) is mounted movable on the first arm (23) and the second support (32.2) of the first guide roller (32) is mounted movable on the second arm (25); wherein the movement of the first support (32.1) of the first guide roller (32) on the first arm (23) and the movement of the second support (32.2) of the first guide roller (32) on the second arm (25) are controlled by the first actuator (75) and by the second actuator (75), respectively; and wherein the first support (35.1) of the second guide roller (35) is mounted fixed on the first arm (23) and the second support (35.2) of the second guide roller (35) is mounted fixed on the second arm (25).

6. The single facer (1) of at least claims 2 and 5, wherein the first support (35.1) of the second guide roller (35) is fixed relative to the first arm (23) and the second support (35.2) of the second guide roller (35) is fixed relative to the second arm (25); wherein the first support (32.1) of the first guide roller (32) and the second support (32.2) of the first guide roller (32) are mounted respectively in a first movable unit (71) fastened to the first arm (23) and in a second movable unit (72) fastened to the second arm (25); wherein the first movable unit (71) is fastened to the first pivoting arm (23) through the first actuator (75) and through a first rocker arm (73) hinged to the first arm (23) around a first pivot axis approximately parallel to the articulation axis (29) of the support structure; wherein the second movable unit (72) is fastened to the second arm (25) through the second actuator (75) and through a second rocker arm (73) hinged to the second arm (25) around a second pivot axis approximately parallel to an articulation axis (29) of the support structure to a bearing frame (3); and wherein the pivot axis of at least one of the first rocker arm (73) and second rocker arm (73) is adjustable through a third actuator (77).

7. The single facer (1) of claim 6, wherein the first actuator (75) is a linear actuator with a first end hinged to the first arm (23) around an axis approximately parallel to the articulation axis (29) of the support structure and a second end rigidly coupled to the first movable unit (71); and wherein the second actuator (75) is a linear actuator with a first end hinged to the second arm (25) around an axis approximately parallel to an articulation axis (29) of the support structure of the bearing frame (3) and a second end rigidly coupled to the second movable unit (72).

8. The single facer (1) of one or more of the previous claims, wherein the adjusting and guiding arrangement for adjusting and guiding the continuous flexible member (31) comprises at least the third actuator (77) provided on one of the first arm (23) and second arm (25), to tilt the rotation axis of at least one of the first guide roller (32) and second guide roller (35) in an adjustment direction transversal to a plane where the rotation axis (33) of the first guide roller (32) and the rotation axis (37) of the second guide roller (35) lie when the rotation axes of the first guide roller (32) and of the second guide roller (35) are parallel to each other.

9. The single facer (1) of claim 8, wherein the control unit (101) is programmed in such a way that, when the sensors (103) detect a lateral shifting of the continuous flexible member (31), the control unit (101) performs a correction cycle for correcting the lateral shifting, causing a variation in the inclination of the rotation axis of the at least one of the first guide roller (32) and second guide roller (35) in the adjustment direction through the third actuator (77); the variation changing the relative position of the first guide roller and of the second guide roller from the initial position to the correction position; the variation in the inclination being such as to reduce or to remove the lateral shifting of the continuous flexible member (31).

10. The single facer (1) of one or more of the previous claims, wherein the second guide roller (35) is motorized.

11. The single facer (1) of one or more of the previous claims, wherein the sensors (103) are magnetic sensors adapted to detect magnets fastened near the first longitudinal edge (31A) and the second longitudinal edge (31B) of the continuous flexible member (31).

12. The single facer of claim 11, wherein the magnetic sensors (103) comprise: a first set of magnetic sensors (103A) on the first side of the pressing unit (21), aligned with one another in a direction (D) orthogonal to the forward direction (f31) of the continuous flexible member (31), and a second set of magnetic sensors (103B) on the second side of the pressing unit (21), aligned with one another in the direction (D) orthogonal to the forward direction (f31) of the continuous flexible member (31); wherein the magnetic sensors are adapted to detect a lateral shifting of the longitudinal edges of the continuous flexible member (31) in the direction (D) orthogonal to the forward direction (f31), and to detect a twisting of the continuous flexible member (31); wherein preferably the first set of magnetic sensors (103A) is adapted to detect the passage of a magnet (104A) fastened to the continuous flexible member (31) in the vicinity of the first longitudinal edge (31A) of the continuous flexible member (31); and the second set of magnetic sensors (103B) is adapted to detect the passage of a magnet (104B) fastened to the continuous flexible member (31) in the vicinity of the second longitudinal edge (31B); and wherein the control unit is so preferably configured as: to detect a lateral shifting of the continuous flexible member (31) based on signals coming from any of the first set of magnetic sensors (103A) and second set of magnetic sensors (103B) and generated by the passage of the respective magnet fastened to the continuous flexible member (31); and to detect a twisting in the continuous flexible member (31) based on signals coming from both the first set of magnetic sensors (103A) and second set of magnetic sensors (103B) and generated by the passage of magnets fastened to the continuous flexible member (31)..

13. A method for controlling a single facer (1) for producing single-face corrugated board comprising: a first corrugating roller (15) and a second corrugating roller (17) meshing with each other; a support structure having a first arm (23) on a first side of the single facer (1) and a second arm (25) on a second side of the single facer (1); a first guide roller (32); a second guide roller (35); a continuous flexible member (31), driven around the first guide roller (32) and the second guide roller (35) and pressed against the second corrugating roller (17); the method comprising the following steps:
- monitoring the position of the continuous flexible member (31) with respect to the first guide roller (32) and the second guide roller (35) during the rotation of the first guide roller (32) and of the second guide roller (35), to detect lateral shifting and twisting of the continuous flexible member (31);
- if a lateral shifting and/or a twisting of the continuous flexible member (31) is detected, performing a correction cycle by modifying the mutual position of the first guide roller (32) and of the second guide roller (35) from an initial position to a correction position, causing a correction of the lateral shifting and/or the twisting; **characterised in that** once the lateral shifting and/or the twisting has been corrected, bringing the first guide roller (32) and the second guide roller (35) in an intermediate position between the initial position and the correction position.

14. The method of claim 13, wherein, if a twisting of the continuous flexible member (31) is detected, the correction cycle comprises a lateral shifting correction cycle including the steps of:
varying the distance between a first support (32.1) of the first guide roller (32) on the first arm (23) and a first support (35.1) of the second guide roller (35) on the first arm (25) with respect to the distance between a second support (32.2) of the first guide roller (32) on the second arm and a second support (35.2) of the second guide roller (35) on the second arm (25); the variation changing the relative position of the first guide roller (32) and of the second guide roller (35) from the initial position to the correction position; wherein the variation reduces or removes the twisting of the continuous flexible member (31);
once the twisting has been removed or corrected, bringing the first guide roller (32) and the second guide roller (35) to an intermediate position between the initial position and the correction position.

15. The method of claim 13 or 14, wherein if a lateral shifting of the continuous flexible member (31) is detected, a lateral shifting correction cycle is performed, including the steps of:
causing a variation in the inclination of the rotation axis of at least one of the first guide roller (32) and second guide roller (35), the variation changing the relative position of the first guide roller (32) and of the second guide roller (35) from the initial position to the correction position; wherein the variation in the inclination reduces or removes the lateral shifting of the continuous flexible member (31);
once the lateral shifting has been corrected or removed, bringing the first guide roller (32) and the second guide roller (35) to an intermediate position between the initial position and the correction position.

16. The method of any one of claims 13 to 15, wherein the position of the continuous flexible member (31) is detected by means of magnetic sensors adapted to detect the lateral shifting and the twisting of the continuous flexible member (31).

17. The method of claim 16, wherein the lateral shifting and the twisting of the continuous flexible member (31) are detected by: a first set of magnetic sensors (103A) on a first side of the continuous flexible member (31), aligned with one another in a direction (D) orthogonal to the forward direction (f31) of the continuous flexible member (31), and a second set of magnetic sensors (103B) on the second side of the continuous flexible member (31), aligned with one another in the direction (D) orthogonal to the forward direction (f31) of the continuous flexible member (31).

18. The method of claim 17, comprising the steps of detecting, through the first set of magnetic sensors (103A), the passage of a magnet (104A) fastened to the continuous flexible member (31) in the vicinity of a first longitudinal edge (31A) of the continuous flexible member (31); and of detecting, through the second set of magnetic sensors (103B), the passage of a magnet (104B) fastened to the continuous flexible member (31) in the vicinity of a second longitudinal edge (31B) of the continuous flexible member (31).

19. The method of claim 17 or 18, comprising the steps of detecting a lateral shifting of the continuous flexible member (31) based on signals coming from any of the first set of magnetic sensors (103A) and the second set of magnetic sensors (103B) and generated by the passage of the respective magnet (104A, 104B) fastened to the continuous flexible member (31); and of detecting a twisting of the continuous flexible member (31) based on the signals coming from both the first set of magnetic sensors (103A) and the second set of magnetic sensors (103B) and generated by the passage of magnets fastened in the vicinity of the first edge and of the second edge of the continuous flexible member (31).

## Patentansprüche

1. Einseitige Wellmaschine (1) zur Herstellung von einseitiger Wellpappe, umfassend:
a) eine erste Wellwalze (15) und eine zweite Wellwalze (17), die miteinander in Eingriff stehen;
b) eine Tragkonstruktion, die einen ersten Arm (23) auf einer ersten Seite der Wellmaschine (1);
(1) und einen zweiten Arm (25) auf einer zweiten Seite der Wellmaschine (1);
c) eine erste Führungswalze (32) mit einer ersten Drehachse (33), die über eine jeweilige erste Halterung (32.1) am ersten Arm (23) und über eine jeweilige zweite Halterung (32.2) am zweiten Arm (25) gelagert ist;
d) eine zweite Führungswalze (35) mit einer zweiten Drehachse (37), die über eine entsprechende erste Halterung (35.1) am ersten Arm (23) und über eine entsprechende zweite Halterung (35.2) am zweiten Arm (25) gelagert ist;
e) ein durchgehendes flexibles Element (31), das um die erste Führungswalze (32) und die zweite Führungswalze (35) geführt wird und eine erste Längskante (31A) sowie eine zweite Längskante (31B) aufweist, wobei sich die erste Längskante und die zweite Längskante parallel zu einer Vorwärtsrichtung des durchgehenden flexiblen Elements (31) erstrecken;
f) eine Einstell- und Führungsanordnung zum Einstellen und Führen des durchgehenden flexiblen Elements (31), umfassend:
f1. Sensoren (103), die dazu ausgelegt sind, eine seitliche Verschiebung und eine Verdrehung des durchgehenden flexiblen Elements (31) zu erfassen; und
f2. Aktuatoren (75, 77), die dazu ausgelegt sind, die gegenseitige Position der ersten Führungswalze (32) und der zweiten Führungswalze (35) zu verändern;
f3. eine Steuereinheit (101), die dafür ausgelegt ist:
(a) die Aktuatoren (75, 75, 77) auf der Grundlage von Signalen, die von den Sensoren (103) empfangenen werden, zu aktivieren und einen Korrekturzyklus durchzuführen, indem die gegenseitige Position der ersten Führungswalze (32) und der zweiten Führungswalze (35) von einer Ausgangsposition in eine Korrekturposition verändert wird, wodurch eine Korrektur der seitlichen Verschiebung und der Verdrehung bewirkt;
**dadurch gekennzeichnet, dass** die Steuereinheit ferner dazu ausgelegt ist,
dass, sobald die seitliche Verschiebung und die Verdrehung beseitigt oder korrigiert wurden, die erste Führungswalze (32) und die zweite Führungswalze (35) in eine Zwischenposition zwischen der Ausgangsposition und der Korrekturposition gebracht werden.

2. Einseitige Wellmaschine nach Anspruch 1, wobei die Einstell- und Führungsanordnung zum Einstellen und Führen des durchgehenden flexiblen Elements (31) umfasst:
- einen ersten Aktuator (75), der dem ersten Arm (23) zugeordnet ist und dazu ausgelegt ist, den Abstand zwischen der ersten Halterung (32.1) der ersten Führungswalze (32) und der ersten Halterung (35.1) der zweiten Führungswalze (35) einzustellen;
- einen zweiten Aktuator (75), der dem zweiten Arm (25) zugeordnet ist und dazu ausgelegt ist,
den Abstand zwischen der zweiten Halterung (32.2) der ersten Führungswalze (32) und der zweiten Halterung (35.2) der zweiten Führungswalze (35) einzustellen, wobei der erste Aktuator (75) und der zweite Aktuator (75) unabhängig voneinander betätigbar sind;
wobei die Steuereinheit (101) so konfiguriert ist, dass sie auf der Grundlage des Signals der Sensoren (103) unterschiedlich auf den ersten Aktuator und den zweiten Aktuator einwirkt, um eine Verdrehung des durchgehenden flexiblen Elements (31) zu korrigieren.

3. Einseitige Wellmaschine nach Anspruch 2, wobei die Steuereinheit (101) derart programmiert ist, dass, wenn die Sensoren (103) eine Verdrehung des durchgehenden flexiblen Elements (31) erfassen, die Steuereinheit (101) einen Korrekturzyklus zur Korrektur der Verdrehung durchführt, wodurch eine Änderung des Abstands zwischen der ersten Halterung (32.1) der ersten Führungswalze (32) und der ersten Halterung (35.1) der zweiten Führungswalze (35) im Verhältnis zum Abstand zwischen der zweiten Halterung (32.2) der ersten Führungswalze (32) und der zweiten Halterung (35.2) der zweiten Führungswalze (35) bewirkt wird; wobei die Veränderung die relative Position der ersten Führungswalze (32) und der zweiten Führungswalze (35) von der Ausgangsposition in die Korrekturposition verändert; wobei die Veränderung so ausgelegt ist, dass sie die Verdrehung des durchgehenden flexiblen Elements (31) verringert oder beseitigt.

4. Einseitige Wellmaschine (1) nach Anspruch 2 oder 3, wobei der erste Aktuator (75) und der zweite Aktuator (75) Linearaktuatoren sind, insbesondere Zylinder-Kolben-Aktuatoren oder mechanische Heber.

5. Einseitige Wellmaschine (1) nach einem oder mehreren der Ansprüche 2 bis 4, wobei: die erste Halterung (32.1) der ersten Führungswalze (32) am ersten Arm (23) beweglich gelagert ist und die zweite Halterung (32.2) der ersten Führungswalze (32) am zweiten Arm (25) beweglich gelagert ist; wobei die Bewegung der ersten Halterung (32.1) der ersten Führungswalze (32) am ersten Arm (23) und die Bewegung der zweiten Halterung (32.2) der ersten Führungswalze (32) am zweiten Arm (25) jeweils durch den ersten Aktuator (75) und durch den zweiten Aktuator (75) gesteuert werden; und wobei die erste Halterung (35.1) der zweiten Führungswalze (35) fest am ersten Arm (23) angebracht ist und die zweite Halterung (35.2) der zweiten Führungswalze (35) fest am zweiten Arm (25) angebracht ist.

6. Einseitige Wellmaschine (1) nach mindestens den Ansprüchen 2 und 5, wobei die erste Halterung (35.1) der zweiten Führungswalze (35) relativ zum ersten Arm (23) fixiert ist und die zweite Halterung (35.2) der zweiten Führungswalze (35) relativ zum zweiten Arm (25) fixiert ist; wobei die erste Halterung (32.1) der ersten Führungswalze (32) und die zweite Halterung (32.2) der ersten Führungswalze (32) jeweils in einer ersten beweglichen Einheit (71), die am ersten Arm (23) befestigt ist, und in einer zweiten beweglichen Einheit (72), die am zweiten Arm (25) befestigt ist, angebracht sind; wobei die erste bewegliche Einheit (71) am ersten Schwenkarm (23) befestigt ist, und zwar über den ersten Aktuator (75) sowie über einen ersten Kipphebel (73), der um eine erste Schwenkachse, die annähernd parallel zur Gelenkachse (29) der Tragkonstruktion verläuft, am ersten Arm (23) angelenkt ist; wobei die zweite bewegliche Einheit (72) über den zweiten Aktuator (75) am zweiten Arm (25) befestigt ist und über einen zweiten Kipphebel(73), der um eine zweite Schwenkachse, die annähernd parallel zu einer Gelenkachse (29) der Tragkonstruktion verläuft, an dem zweiten Arm (25) angelenkt ist, an einem Lagerrahmen (3) befestigt ist; und wobei die Schwenkachse mindestens eines des ersten Kipphebels (73) und des zweiten Kipphebels (73) über einen dritten Aktuator (77) einstellbar ist.

7. Einseitige Wellmaschine (1) nach Anspruch 6, wobei der erste Aktuator (75) ein Linearaktuator ist, dessen erstes Ende um eine Achse, die annähernd parallel zur Gelenkachse (29) der Tragkonstruktion verläuft, an dem ersten Arm (23) angelenkt ist und dessen zweites Ende starr mit der ersten beweglichen Einheit (71) verbunden ist; und wobei der zweite Aktuator (75) ein Linearaktuator ist, dessen erstes Ende um eine Achse, die annähernd parallel zu einer Gelenkachse (29) der Tragstruktur des Lagerrahmens (3) verläuft, am zweiten Arm (25) angelenkt ist und dessen zweites Ende starr mit der zweiten beweglichen Einheit (72) verbunden ist.

8. Einseitige Wellmaschine (1) nach einem oder mehreren der vorstehenden Ansprüche, wobei die Einstell- und Führungsanordnung zum Einstellen und Führen des durchgehenden flexiblen Elements (31) mindestens den dritten Aktuator (77) umfasst, der an einem des ersten Arms (23) und des zweiten Arms (25) vorgesehen ist, um die Drehachse zumindest einer der ersten Führungswalze (32) und der zweiten Führungswalze (35) in eine Einstellrichtung quer zu einer Ebene zu neigen, in der die Drehachse (33) der ersten Führungswalze (32) und die Drehachse (37) der zweiten Führungswalze (35) liegen, wenn die Drehachsen der ersten Führungswalze (32) und der zweiten Führungswalze (35) parallel zueinander sind.

9. Einseitige Wellmaschine (1) nach Anspruch 8, wobei die Steuereinheit (101) derart programmiert ist, dass, wenn die Sensoren (103) eine seitliche Verschiebung des durchgehenden flexiblen Elements (31) erfassen, die Steuereinheit (101) einen Korrekturzyklus zur Korrektur der seitlichen Verschiebung durchführt, wodurch über den dritten Aktuator (77) eine Änderung der Neigung der Drehachse der zumindest einen der ersten Führungswalze (32) und der zweiten Führungswalze (35) in Einstellrichtung bewirkt wird; wobei die Änderung die relative Position der ersten Führungswalze und der zweiten Führungswalze von der Ausgangsposition in die Korrekturposition verändert; wobei die Änderung der Neigung so beschaffen ist, dass die seitliche Verschiebung des durchgehenden flexiblen Elements (31) verringert oder beseitigt wird.

10. Einseitige Wellmaschine (l) nach einem oder mehreren der vorstehenden Ansprüche, wobei die zweite Führungswalze (35) motorisiert ist.

11. Einseitige Wellmaschine (1) nach einem oder mehreren der vorstehenden Ansprüche, wobei die Sensoren (103) Magnetsensoren sind, die dazu ausgelegt sind, Magnete zu erfassen, die in der Nähe der ersten Längskante (31A) und der zweiten Längskante (31B) des durchgehenden flexiblen Elements (31) befestigt sind.

12. Einseitige Wellmaschine nach Anspruch 11, wobei die Magnetsensoren (103) folgendes umfassen: einen ersten Satz von Magnetsensoren (103A) auf der ersten Seite der Presseneinheit (21), die in einer Richtung (D) orthogonal zur Vorwärtsrichtung (f31) des durchgehenden flexiblen Elements (31) zueinander ausgerichtet sind, und einen zweiten Satz von Magnetsensoren (103B) auf der zweiten Seite der Presseneinheit (21), die in der Richtung (D) orthogonal zur Vorwärtsrichtung (f31) des durchgehenden flexiblen Elements (31) zueinander ausgerichtet sind; wobei die Magnetsensoren dazu ausgelegt sind, eine seitliche Verschiebung der Längskanten des durchgehenden flexiblen Elements (31) in der Richtung (D) orthogonal zur Vorwärtsrichtung (f31) zu erfassen sowie eine Verdrehung des durchgehenden flexiblen Elements (31) zu erfassen; wobei vorzugsweise der erste Satz von Magnetsensoren (103A) dazu ausgelegt ist, das Passieren Durchgang eines Magneten (104A) zu erfassen, der an dem durchgehenden flexiblen Element (31) in der Nähe der ersten Längskante (31A) des durchgehenden flexiblen Elements (31) befestigt ist; und der zweite Satz von Magnetsensoren (103B) dazu ausgelegt ist, das Passieren eines Magneten (104B) zu erfassen, der an dem durchgehenden flexiblen Element (31) in der Nähe der zweiten Längskante (31B) befestigt ist; und wobei die Steuereinheit vorzugsweise so konfiguriert ist, dass sie: eine seitliche Verschiebung des durchgehenden flexiblen Elements (31) auf der Grundlage von Signalen erfasst, die von einem beliebigen Sensor des ersten Satzes von Magnetsensoren (103A) und des zweiten Satzes von Magnetsensoren (103B) stammen und durch das Passieren des jeweiligen, am durchgehenden flexiblen Element (31) befestigten Magneten erzeugt werden; und eine Verdrehung des durchgehenden flexiblen Elements (3 l) auf der Grundlage von Signalen zu erfassen, die sowohl von dem ersten Satz von Magnetsensoren (103A) als auch von dem zweiten Satz von Magnetsensoren (103B) stammen und durch das Passieren von am durchgehenden flexiblen Element (31) befestigten Magneten erzeugt werden.

13. Verfahren zur Steuerung einer einseitigen Wellmaschine (1) zur Herstellung von einseitiger Wellpappe, umfassend: eine erste Wellwalze (15) und eine zweite Wellwalze (17), die miteinander in Eingriff stehen; eine Tragkonstruktion mit einem ersten Arm (23) auf einer ersten Seite der einseitigen Wellmaschine (1) und einem zweiten Arm (25) auf einer zweiten Seite der einseitigen Wellmaschine (1); eine erste Führungswalze (32); eine zweite Führungswalze (35); ein durchgehendes flexibles Element (31), das um die erste Führungswalze (32) und die zweite Führungswalze (35) herumgeführt und gegen die zweite Wellwalze (17) gepresst wird; wobei das Verfahren die folgenden Schritte umfasst:
- Überwachen der Position des durchgehenden flexiblen Elements (31) relativ zur ersten Führungswalze (32) und zur zweiten Führungswalze (35) während der Drehung der ersten Führungswalze (32) und der zweiten Führungswalze (35), um seitliche Verschiebungen und Verdrehungen des durchgehenden flexiblen Elements (31) zu erfassen;
- falls eine seitliche Verschiebung und/oder eine Verdrehung des durchgehenden flexiblen Elements (31) erfasst wird, Durchführen eines Korrekturzyklus durch Verändern der gegenseitigen Position der ersten Führungswalze (32) und der zweiten Führungswalze (35) von einer Ausgangsposition in eine Korrekturposition, wodurch eine Korrektur der seitlichen Verschiebung und/oder der Verdrehung bewirkt wird;
**dadurch gekennzeichnet, dass**
- sobald die seitliche Verschiebung und/oder die Verdrehung korrigiert wurde, die erste Führungswalze (32) und die zweite Führungswalze (35) in eine Zwischenposition zwischen der Ausgangsposition und der Korrekturposition gebracht werden.

14. Verfahren nach Anspruch 13, wobei, falls eine Verdrehung des durchgehenden flexiblen Elements (31) erfasst wird, der Korrekturzyklus einen Korrekturzyklus für die seitliche Verschiebung umfasst, der die folgenden Schritte beinhaltet: Verändern des Abstands zwischen einer ersten Halterung (32.1) der ersten Führungswalze (32) am ersten Arm (23) und einer ersten Halterung (35.1) der zweiten Führungswalze (35) am ersten Arm (25) in Bezug auf den Abstand zwischen einer zweiten Halterung (32.2) der ersten Führungswalze (32) am zweiten Arm und einer zweiten Halterung (35.2) der zweiten Führungswalze (35) am zweiten Arm (25); wobei die Veränderung die relative Position der ersten Führungswalze (32) und der zweiten Führungswalze (35) von der Ausgangsposition in die Korrekturposition verschiebt; wobei die Veränderung die Verdrehung des durchgehenden flexiblen Elements (31) verringert oder beseitigt;
sobald die Verdrehung beseitigt oder korrigiert ist, Bringen der ersten Führungswalze (32) und der zweiten Führungswalze (35) in eine Zwischenposition zwischen der Ausgangsposition und der Korrekturposition.

15. Verfahren nach Anspruch 13 oder 14, wobei,
falls eine seitliche Verschiebung des endlosen flexiblen Elements (31) erfasst wird, ein Korrekturzyklus für die seitliche Verschiebung durchgeführt wird, der die folgenden Schritte umfasst:
Hervorrufen einer Änderung der Neigung der Drehachse mindestens einer der ersten Führungswalze (32) und der zweiten Führungswalze (35), wobei die Änderung die relative Position der ersten Führungswalze (32) und der zweiten Führungswalze (35) von der Ausgangsposition in die Korrekturposition verändert; wobei die Veränderung der Neigung die seitliche Verschiebung des durchgehenden flexiblen Elements (31) verringert oder beseitigt; sobald die seitliche Verschiebung korrigiert oder beseitigt wurde, Bringen der ersten Führungswalze (32) und der zweite Führungswalze (35) in eine Zwischenposition zwischen der Ausgangsposition und der Korrekturposition.

16. Verfahren nach einem der Ansprüche 13 bis 15, wobei die Position des durchgehenden flexiblen Elements (31) mittels Magnetsensoren erfasst wird, die dazu ausgelegt sind, die seitliche Verschiebung und die Verdrehung des durchgehenden flexiblen Elements (31) zu erfassen.

17. Verfahren nach Anspruch 16, wobei die seitliche Verschiebung und die Verdrehung des durchgehenden flexiblen Elements (31) erfasst werden durch: einen ersten Satz von Magnetsensoren (103A) auf einer ersten Seite des durchgehenden flexiblen Elements (31), die in einer Richtung (D) orthogonal zur Vorwärtsrichtung (f31) des durchgehenden flexiblen Elements (31) zueinander ausgerichtet sind, und einen zweiten Satz von Magnetsensoren (103B) auf der zweiten Seite des durchgehenden flexiblen Elements (31), die in der Richtung (D) orthogonal zur Vorwärtsrichtung (f31) des durchgehenden flexiblen Elements (31) zueinander ausgerichtet sind.

18. Verfahren nach Anspruch 17, umfassend die Schritte des Erfassens des Passierens eines Magneten (104A), der an dem durchgehenden flexiblen Element (31) in der Nähe einer ersten Längskante (31A) des durchgehenden flexiblen Elements (31) befestigt ist, mittels des ersten Satzes von Magnetsensoren (103A); sowie das Erfassen des Passierens eines Magneten (104B), der an dem durchgehenden flexiblen Element (31) in der Nähe einer zweiten Längskante (31B) des durchgehenden flexiblen Elements (31) befestigt ist, mittels des zweiten Satzes von Magnetsensoren (103B).

19. Verfahren nach Anspruch 17 oder 18, umfassend die Schritte des Erfassens einer seitlichen Verschiebung des durchgehenden flexiblen Elements (31) auf der Grundlage von Signalen, die von dem ersten Satz von Magnetsensoren (103A) oder dem zweiten Satz von Magnetsensoren (103B) stammen und durch das Passieren des jeweiligen, an dem durchgehenden flexiblen Element (31) befestigten Magneten (104A, 104B) erzeugt werden; sowie das Erfassen einer Verdrehung des durchgehenden flexiblen Elements (31) auf der Grundlage von Signalen, die sowohl von dem ersten Satz von Magnetsensoren (103A) als auch von dem zweiten Satz von Magnetsensoren (103B) stammen und durch das Passieren von Magneten erzeugt werden, die in der Nähe der ersten Kante und der zweiten Kante des durchgehenden flexiblen Elements (31) befestigt sind.

## Revendications

1. Une machine pour carton simple face (1) pour la production de carton ondulé simple face, comprenant :
a) un premier rouleau d'ondulation (15) et un deuxième rouleau d'ondulation (17) engrenant l'un avec l'autre ;
b) une structure de support, comprenant un premier bras (23) d'un premier côté de la machine pour carton simple face (1) et un deuxième bras (25) d'un deuxième côté de la machine pour carton simple face (1) ;
c) un premier rouleau de guidage (32) avec un premier axe de rotation (33) supporté à l'aide d'un premier support respectif (32.1) sur le premier bras (23) et à l'aide d'un deuxième support respectif (32.2) sur le deuxième bras (25) ;
d) un deuxième rouleau de guidage (35) avec un deuxième axe de rotation (37), supporté à l'aide d'un premier support respectif (35.1) sur le premier bras (23) et à l'aide d'un deuxième support respectif (35.2) sur le deuxième bras (25) ;
e) un organe flexible continu (31) entraîné autour du premier rouleau de guidage (32) et du deuxième rouleau de guidage (35) et ayant un premier bord longitudinal (31A) et un deuxième bord longitudinal (31B), le premier bord longitudinal et le deuxième bord longitudinal s'étendant parallèlement à une direction d'avancement de l'organe flexible continu (31) ;
f) un arrangement de réglage et de guidage pour régler et guider l'organe flexible continu (31), comprenant :
f1. des détecteurs (103) aptes à détecter un déplacement latéral et une torsion de l'organe flexible continu (31) ; et
f2. des actionneurs (75, 77) aptes à modifier la position mutuelle du premier rouleau de guidage (32) et du deuxième rouleau de guidage (35) ;
f3. une unité de commande (101) configurée pour :
(a) activer les actionneurs (75, 75, 77) sur la base de signaux reçus par les détecteurs (103) et exécutant un cycle de correction en modifiant la position relative du premier rouleau de guidage (32) et du deuxième rouleau de guidage (35) d'une position initiale à une position de correction, provoquant une correction du déplacement latéral et de la torsion ;
**caractérisée en ce que** l'unité de commande est en outre configurée pour :
une fois que le déplacement latéral et la torsion ont été éliminés ou corrigés, amener la premier rouleau de guidage (32) et le deuxième rouleau de guidage (35) dans une position intermédiaire entre la position initiale et la position de correction.

2. La machine pour carton simple face selon la revendication 1, dans laquelle l'arrangement de réglage et de guidage de l'organe flexible continu (31) comprend :
- un premier actionneur (75) associé au premier bras (23) et apte à régler la distance entre le premier support (32.1) du premier rouleau de guidage (32) et le premier support (35.1) du deuxième rouleau de guidage (35) ;
- un deuxième actionneur (75) associé au deuxième bras (25) et apte à régler la distance entre le deuxième support (32.2) du premier rouleau de guidage (32) et le deuxième support (35.2) du deuxième rouleau de guidage (35), le premier actionneur (75) et le deuxième actionneur (75) étant actionnables indépendamment l'un de l'autre ;
dans lequel l'unité de commande (101) est configurée pour agir différemment sur le premier actionneur et sur le deuxième actionneur sur la base du signal reçu par les détecteurs (103) pour corriger une torsion de l'organe flexible continu (31).

3. La machine pour carton simple face selon la revendication 2, dans laquelle l'unité de commande (101) est programmée de telle manière que lorsque les détecteurs (103) détectent une torsion de l'organe flexible continu (31), l'unité de commande (101) exécute un cycle de correction pour corriger la torsion, provoquant une variation de la distance entre le premier support (32.1) du premier rouleau de guidage (32) et le premier support (35.1) du deuxième rouleau de guidage (35) par rapport à la distance entre le deuxième support (32.2) du premier rouleau de guidage (32) et le deuxième support (35.2) du deuxième rouleau de guidage (35) ; la variation changeant la position relative du premier rouleau de guidage (32) et du deuxième rouleau de guidage (35) de la position initiale à la position de correction ; la variation étant telle qu'elle réduise ou élimine la torsion de l'organe flexible continu (31).

4. La machine pour carton simple face (1) selon la revendication 2 ou 3, dans laquelle le premier actionneur (75) et le deuxième actionneur (75) sont des actionneurs linéaires, en particulier des actionneurs à cylindre-piston ou des vérins mécaniques.

5. La machine pour carton simple face (1) selon l'une ou plusieurs des revendications 2 à 4, dans laquelle : le premier support (32.1) du premier rouleau de guidage (32) est monté mobile sur le premier bras (23) et le deuxième support (32.2) du premier rouleau de guidage (32) est monté mobile sur le deuxième bras (25) ; dans laquelle le mouvement du premier support (32.1) du premier rouleau de guidage (32) sur le premier bras (23) et le mouvement du deuxième support (32.2) du premier rouleau de guidage (32) sur le deuxième bras (25) sont commandés par le premier actionneur (75) et le deuxième actionneur (75), respectivement ; et dans lequel le premier support (35.1) du deuxième rouleau de guidage (35) est monté fixe sur le premier bras (23) et le deuxième support (35.2) du deuxième rouleau de guidage (35) est monté fixe sur le deuxième bras (25).

6. La machine pour carton simple face (1) selon les revendications 2 et 5 au moins, dans laquelle le premier support (35.1) du premier rouleau de guidage (35) est fixe par rapport au premier bras (23) et le deuxième support (35.2) du deuxième rouleau de guidage (35) est fixe par rapport au deuxième bras (25) ; dans laquelle le premier support (32.1) du premier rouleau de guidage (32) et le deuxième support (32.2) du premier rouleau de guidage (32) sont montés respectivement sur une première unité mobile (71) fixée au premier bras (23) et dans une deuxième unité mobile (72) fixée au deuxième bras (25) ; dans laquelle la première unité mobile (71) est fixée au premier bras (23) à l'aide du premier actionneur (75) et à l'aide d'un premier bras oscillant (73) articulé au premier bras (23) autour d'un premier axe de pivotement approximativement parallèle à l'axe d'articulation (29) de la structure de support ; dans laquelle la deuxième unité mobile (72) est fixée au deuxième bras (25) à l'aide du deuxième actionneur (75) et à l'aide d'un deuxième bras oscillant (73) articulé au deuxième bras (25) autour d'une deuxième axe de pivotement approximativement parallèle à un axe d'articulation (29) de la structure de support à un cadre de support (3) ; et dans laquelle l'axe de pivotement d'au moins l'un du premier bras oscillant (73) et du deuxième bras oscillant (73) est réglable à l'aide d'un troisième actionneur (77).

7. La machine pour carton simple face (1) selon la revendication 6, dans laquelle le premier actionneur (75) est un actionneur linéaire avec une première extrémité articulée au premier bras (23) autour d'un axe approximativement parallèle à l'axe d'articulation (29) de la structure de support et une deuxième extrémité rigidement couplée à la première unité mobile (71) ; et dans laquelle le deuxième actionneur (75) est un actionneur linéaire avec une première extrémité articulée au deuxième bras (25) autour d'un axe approximativement parallèle à un axe d'articulation (29) de la structure de support du cadre de support (3) et une deuxième extrémité couplée rigidement à ladite deuxième unité mobile (72).

8. La machine pour carton simple face (1) selon l'une ou plusieurs des revendications précédentes, dans laquelle l'arrangement de réglage et de guidage pour régler et ajuster l'organe flexible continu (31) comprend au moins le troisième actionneur (77) prévu sur l'un des premier bras (23) et deuxième bras (25), pour incliner l'axe de rotation d'au moins l'un des premier rouleau de guidage (32) et deuxième rouleau de guidage (35) dans une direction de réglage perpendiculaire à un plan où l'axe de rotation (33) du premier rouleau de guidage (32) et l'axe de rotation (37) du deuxième rouleau de guidage (35) se trouvent lorsque les axes de rotation du premier rouleau de guidage (32) et du deuxième rouleau de guidage (35) sont parallèles l'un à l'autre.

9. La machine pour carton simple face (1) selon la revendication 8, dans laquelle l'unité de commande (101) est programmée de telle manière que lorsque les détecteurs (103) détectent un déplacement latéral de l'organe flexible continu (31), l'unité de commande (101) exécute un cycle de correction pour corriger le déplacement latéral, provoquant une variation de l'inclinaison de l'axe de rotation d'au moins l'un desdits premier rouleau de guidage (32) et deuxième rouleau de guidage (35) dans la direction de réglage à l'aide du troisième actionneur (77) ; la variation changeant la position relative du premier rouleau de guidage et du deuxième rouleau de guidage de la position initiale à la position de correction ; la variation de l'inclinaison étant telle qu'elle réduit ou élimine le déplacement latéral de l'organe flexible continu (31).

10. La machine pour carton simple face (1) selon l'une ou plusieurs des revendications précédentes, dans laquelle le deuxième rouleau de guidage (35) est motorisé.

11. La machine pour carton simple (1) selon l'une ou plusieurs des revendications précédentes, dans laquelle les détecteurs (103) sont des détecteurs magnétiques aptes à détecter des aimants fixés à proximité du premier bord longitudinal (31A) et du deuxième bord longitudinal (31B) de l'organe flexible continu (31).

12. La machine pour carton simple face selon la revendication 11, dans laquelle les détecteurs magnétiques (103) comprennent : un premier ensemble de détecteurs magnétiques (103A) du premier côté de l'unité de pression (21), alignés les uns avec les autres dans une direction (D) perpendiculaire à la direction d'avancement (f31) de l'organe flexible continu (31) et un deuxième ensemble de détecteurs magnétiques (103B) du second côté de l'unité de pression (21), alignés les uns avec les autres dans la direction (D) perpendiculaire à la direction d'avancement (f31) de l'organe flexible continu (31) ; dans laquelle les détecteurs magnétiques sont aptes à détecteur un déplacement latéral des bords longitudinaux de l'organe flexible continu (31) dans la direction (D) perpendiculaire à la direction d'avancement (f31) et à détecter une torsion de l'organe flexible continu (31) ; dans laquelle le premier ensemble de détecteurs magnétiques (103A) est de préférence apte à détecter le passage d'un aimant (104A) fixé à l'organe flexible continu (31) à proximité du premier bord longitudinal (31A) de l'organe flexible continu (31) ; et dans laquelle le deuxième ensemble de détecteurs magnétiques (103B) est apte à détecter le passage d'un aimant (104B) fixé à l'organe flexible continu (31) à proximité du deuxième bord longitudinal (31B) ; et dans laquelle l'unité de commande est de préférence configurée pour : détecter un déplacement latéral de l'organe flexible continu (31) sur la base de signaux provenant de n'importe lequel des premier ensemble de détecteurs magnétiques (103A) et deuxième ensemble de détecteurs magnétiques (103B) et généré par le passage de l'aimant respectif fixé à l'organe flexible continu (31) ; et pour détecter une torsion de l'organe flexible continu (31) sur la base de signaux provenant à la fois du premier ensemble de détecteurs magnétiques (103A) et du deuxième ensemble de détecteurs magnétiques (103B) et générés par le passage d'aimants fixés à l'organe flexible continu (31).

13. Un procédé pour commander une machine pour carton simple face (1) pour la production d'un carton ondulé à simple face (1) comprenant : un premier rouleau d'ondulation (15) et un deuxième rouleau d'ondulation (17) engrenant l'un avec l'autre ; une structure de support ayant un premier bras (23) d'un premier côté de la machine pour carton simple face (1) et un deuxième bras (25) d'un deuxième côté de la machine pour carton simple face (1) ; un premier rouleau de guidage (32) ; un deuxième rouleau de guidage (35) ; un organe flexible continu (31) entraîné autour du premier rouleau de guidage (32) et du deuxième rouleau de guidage (35) et pressé contre le deuxième rouleau d'ondulation (17) ; ce procédé comprenant les étapes suivantes consistant à :
- surveiller la position de l'organe flexible continu (31) par rapport au premier rouleau de guidage (32) et le deuxième rouleau de guidage (35) durant la rotation du premier rouleau de guidage (32) et du deuxième rouleau de guidage (35) pour détecteur un décalage latéral et une torsion de l'organe flexible continu (31) ;
- si un déplacement latéral et/ou une torsion de l'organe flexible continu (31) est détecté, exécution d'un cycle de correction en modifiant la position mutuelle du premier rouleau de guidage (32) et du deuxième rouleau de guidage (35) d'une position initiale à une position de correction, en provoquant une correction du déplacement latéral et/ou de la torsion ;
**caractérisé en ce qu'**une fois que le déplacement latéral et/ou la torsion a été corrigée, amener le premier rouleau de guidage (32) et le deuxième rouleau de guidage (35) dans une position intermédiaire entre la position initiale et la position de correction.

14. Le procédé selon la revendication 13, dans lequel, si une torsion de l'organe flexible continu (31) est détectée, le cycle de correction comprend un cycle de correction de déplacement latéral incluant les étapes consistant à :
faire varier la distance entre un premier support (32.1) du premier rouleau de guidage (32) sur le premier bras (23) et un premier support (35.1) du deuxième rouleau de guidage (35) sur le premier bras (25) par rapport à la distance entre un deuxième support (32.2) du premier rouleau de guidage (32) sur le deuxième bras et un deuxième support (35.2) du deuxième rouleau de guidage (35) sur le deuxième bras (25) ; la variation changeant la position relative du premier rouleau de guidage (32) et du deuxième rouleau de guidage (35) de la position initiale à la position de correction ; la variation réduisant ou éliminant la torsion de l'organe flexible continu (31) ;
une fois que la torsion a été éliminée ou corrigée, amener le premier rouleau de guidage (32) et le deuxième rouleau de guidage (35) dans une position intermédiaire entre la position initiale et la position de correction.

15. Le procédé selon la revendication 13 ou 14, dans lequel si un déplacement latéral de l'organe flexible continu (31) est détecté, un cycle de correction de déplacement latéral est exécuté, incluant les étapes consistant à :
provoquer une variation de l'inclinaison de l'axe de rotation de l'un au moins des premier rouleau de guidage (32) et deuxième rouleau de guidage (35), la variation changeant la position relative du premier rouleau de guidage (32) et du deuxième rouleau de guidage (35) de la position initiale à la position de correction ; la variation de l'inclinaison réduisant ou éliminant le déplacement latéral de l'organe flexible continu (31) ;
une fois que le déplacement latéral a été corrigé ou éliminé, amener le premier rouleau de guidage (32) et le deuxième rouleau de guidage (35) dans une position intermédiaire entre la position initiale et la position de correction.

16. Le procédé selon l'une quelconque des revendications 13 à 15, dans lequel la position de l'organe flexible continu (31) est détectée au moyen de détecteurs magnétiques aptes à détecter le déplacement latéral et la torsion de l'organe flexible continu (31).

17. Le procédé selon la revendication 16, dans lequel le déplacement latéral et la torsion de l'organe flexible continu (31) sont détectés par : un premier ensemble de détecteurs magnétiques (103A) d'un premier côté de l'organe flexible continu (31), alignés les uns avec les autres dans une direction (D) perpendiculaire à la direction d'avancement (f31) de l'organe flexible continu (31) et un deuxième ensemble de détecteurs magnétiques (103B) du deuxième côté de l'organe flexible continu (31), alignés les uns avec les autres dans la direction (D) perpendiculaire à la direction d'avancement (f31) de l'organe flexible continu (31).

18. Le procédé selon la revendication 17, comprenant les étapes consistant à détecter, à l'aide du premier ensemble de détecteurs (103A), le passage d'un aimant (104A) fixé à l'organe flexible continu (31) à proximité d'un premier bord longitudinal (31A) de l'organe flexible continu (31) ; et de détection, à l'aide du deuxième ensemble de détecteurs magnétiques (103B), le passage d'un aimant (104B) fixé à l'organe flexible continu (31) à proximité d'un deuxième bord longitudinal (31B) de l'organe flexible continu (31).

19. Le procédé selon la revendication 17 ou 18, comprenant les étapes consistant à détecter un déplacement latéral de l'organe flexible continu (31) sur la base de signaux provenant de n'importe lequel des premier ensemble de détecteurs magnétiques (103A) et deuxième ensemble de détecteurs magnétiques (103B) et générés par le passage de l'aimant respectif (104A, 104b) fixé à l'organe flexible continu (31) ; et de détection d'une torsion de l'organe flexible continu (31) sur la base des signaux provenant à la fois du premier ensemble de détecteurs magnétiques (103A) et du deuxième ensemble de détecteurs magnétiques (103B) et générés par le passage des aimants fixés à proximité du premier bord et du deuxième bord de l'organe flexible continu (31).
